(19) Europäisches Patentamt
European Patent Office
Office européen des brevets

(11) **EP 2 747 427 B1**

(12) **EUROPEAN PATENT SPECIFICATION**

(45) Date of publication and mention
of the grant of the patent:
**16.03.2016  Bulletin 2016/11**

(51) Int Cl.:
***H04N 13/00*** *(2006.01)*

(21) Application number: **12008579.0**

(22) Date of filing: **21.12.2012**

(54) **Method, apparatus and computer program usable in synthesizing a stereoscopic image**

Verfahren, Vorrichtung und Computerprogramm zur Verwendung bei der Synthetisierung eines stereoskopischen Bildes

Procédé, appareil et programme informatique utilisable dans la synthèse d'une image stéréoscopique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.06.2014  Bulletin 2014/26**

(73) Proprietor: **imcube labs GmbH**
**10587 Berlin (DE)**

(72) Inventors:
• **Plath, Nils**
**10555 Berlin (DE)**
• **Kunter, Matthias**
**10407 Berlin (DE)**
• **Knorr, Sebastian**
**12159 Berlin (DE)**

(74) Representative: **Eisenführ Speiser**
**Patentanwälte Rechtsanwälte PartGmbB**
**Postfach 31 02 60**
**80102 München (DE)**

(56) References cited:
• **WANG O ET AL: "StereoBrush: interactive 2D to 3D conversion using discontinuous warps", SBIM '11 EUROGRAPHICS SYMPOSIUM, ACM, US, no. 8, 5 August 2011 (2011-08-05), pages 47-54, XP002693566, ISBN: 978-1-4503-0906-6**
• **ASEEM AGARWALA: "Efficient Gradient-Domain Compositing Using Quadtrees", ACM, 2 PENN PLAZA, SUITE 701 - NEW YORK USA, 1 July 2007 (2007-07-01), XP040064720,**
• **YINGCAI WU ET AL: "ViSizer: A Visualization Resizing Framework", IEEE TRANSACTIONS ON VISUALIZATION AND COMPUTER GRAPHICS, IEEE SERVICE CENTER, LOS ALAMITOS, CA, US, vol. 19, no. 2, 18 April 2012 (2012-04-18) , pages 278-290, XP011490520, ISSN: 1077-2626, DOI: 10.1109/TVCG.2012.114**
• **NILS PLATH ET AL: "Adaptive Image Warping for Hole Prevention in 3D View Synthesis", IEEE TRANSACTIONS ON IMAGE PROCESSING, vol. 22, no. 9, 1 September 2013 (2013-09-01), pages 3420-3432, XP055073890, ISSN: 1057-7149, DOI: 10.1109/TIP.2013.2268940**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a method usable in synthesizing a stereoscopic image as well as to a corresponding apparatus and computer program.

BACKGROUND OF THE INVENTION

I. Introduction

Up until recently, the technical commitment that was required for the presentation of 3D video was significant, which limited its benefits to a circle of professionals and burdened its general acceptance in a broader audience. However, as a result of a series of technical advances over the past years, 3D displaying devices are becoming increasingly popular in consumer products, for example in television sets, home projectors, or even hand-held devices like smartphones. This development has lead to a growing demand for 3D content.

Though, there exist various technologies for the generation of 3D video for multi-view or stereoscopic displays, the majority of them relies on dense depth maps. As such, the actual 3D image can be created directly on the device. This kind of transmission has the advantage that it reduces the required bandwidth, because the video stream does not have to encode possibly multiple 3D views per frame. Since the 3D view is generated on the device, this also allows for detailed user-side control of the amount of disparity, i.e. the user is able to increase or decrease the 3D effect while watching the video.

In order to supply this increased demand in 3D content, several 2D-to-3D conversion methods have been devised. In general, these processes can be split into two steps: (1) depth estimation and (2) view synthesis. In the first step, a depth structure of the corresponding monocular image is reconstructed, either automatically or with the interaction of an expert. This depth information is then used in the second step to produce multi-view or stereoscopic images. Unfortunately, since view synthesis is based on an estimation of the depth structure and lacks any knowledge of the real world scenery, it has a few shortcomings, for example holes that appear in the 3D image. Holes occur due to a change of perspective that is necessary in order to generate a virtual view. However, changing the perspective of a virtual camera results in previously occluded regions of the image becoming visible. Since the 3D structure of the scene is unknown, there is no information available on how to fill these holes or disocclusions.

Consequently, hole-filling describes a category of algorithms to alleviate the effects of holes and can be subdivided into those approaches that facilitate (1) a post-processing step and (2) a pre-processing step to view synthesis. As the name suggests, the group of post-synthesis hole-filling algorithms closes holes after they have appeared in a texture image, for example using inter- or extrapolation, through clean plates (B. Barenbrug, "Declipse 2: Multi-layer image-and-depth with transparency made practical", in Proceedings of SPIE Stereoscopic Displays and Applications XX, Vol. 7237, San Jose, USA, 2009) or in-painting (M. Bertalmío et al., "Image inpainting", in Proceedings of ACM SIGGRAPH, New Orleans, USA, 2000; C. Cheng et al., "Spatio-temporally consistent novel view synthesis algorithm from video-plus-depth sequences for autostereoscopic displays", in IEEE Transactions on Broadcasting, Vol. 57, No. 2, 2011; A. Criminisi et al., "Region filling and object removal by exemplar-based image inpainting", in IEEE Transactions on Image Processing, Vol. 13, No. 9, 2004). The latter group of algorithms, however, follows strategy in which holes are avoided in the first place rather than filling them later. In other words, the depth structure of an image is changed so that holes will no longer appear in the resulting 3D image, for example by smoothing the depth map (C. Fehn, "Depth-image-based rendering, compression and transmission for a new approach on 3d-tv", in Proceedings of SPIE Stereoscopic Displays and Virtual Reality Systems XI, San Jose, USA, 2004).

In this specification a new approach for the pre-processing of depth maps as an application of 2D-to-3D stereoscopic conversion is proposed. A similar approach is presented in O. Wang et al., "Stereobrush: Interactive 2d to 3d conversion using discontinuous warps", in Proceedings of EUROGRAPHICS Symposium on Sketch-Based Interfaces and Modeling, New York, USA, 2011, where a regularly structured grid is superimposed over an image and then, by solving an optimization problem, the grid is deformed such that holes in the 3D view are filled. The algorithm presented in this specification builds on this idea and extends it to a hierarchical structure that exploits the smoothness of a given depth map in order to reduce the complexity of the underlying optimization problem. This, in turn, results in significant improvements in terms of memory usage and run time. By detecting those regions of an input image that will contain holes in the stereoscopic output, the presented algorithm alters the conversion process in way that it still produces a subjectively and objectively similar output but does no longer contain holes.

The remainder of this specification is organized as follows. Section II briefly summarizes the current state-of-the-art of 2D-to-3D conversion. This is followed by a more detailed introduction to the underlying theory of depth image-based rendering and image warping in section III. Then, in section IV, the regular grid-based approach to hole-filling is introduced in order to motivate the adaptive approach, which is explained in section V. The performance and output quality of both algorithms are investigated and discussed in section VI and final conclusions are drawn in section VII.

II. Related Work

This section gives a brief overview of the current state-of-the-art in 2D-to-3D conversion as this is the main application for the presented approach. Since 2D-to-3D conversion deals with the rendering of virtual views capturing the scene from a different perspective, depth information must be recovered from a single 2D image or sequence of 2D images in order to shift pixel from the original source image to the right positions in a virtual target image, i.e. to create a stereoscopic pair of images. In general, the 2D-to-3D conversion process consists of two steps: the recovery of the depth structure (i.e. the analysis) and the rendering of a novel perspective image (i.e. the synthesis).

The first step usually implies the generation of a depth map or a 3D model for each frame in a video sequence. The term depth map refers to a grayscale image or image channel, which relates scene depth information to pixels of an image at a given viewpoint. In computer graphics, this concept is very close to depth buffers or z-buffers. The map has the same dimensions as the corresponding 2D image. The grayscale value of a pixel in a depth map indicates the depth of a pixel. Whether high values correspond to great depth or to low depth is merely a design decision. In the remainder of this specification, low depth values (dark) will correspond to pixels far away from the viewer. The generation of depth maps can be roughly classified into semi-automatic (i.e. techniques that require user-interaction to a certain degree) and fully-automatic techniques (A. Smolic et al., "Three-dimensional video postproduction and processing", in Proceedings of the IEEE, Vol. 99, No. 4, 2011). Semi-automatic techniques are very time-consuming, and, thus, cost-intensive, since object masks have to be created (rotoscoping) (C. Rother et al., "GrabCut: Interactive foreground extraction using iterated graph cuts", in ACM Transactions on Graphics, Vol. 23, No. 3, 2004; J. Wang et al., "Interactive video cutout", in ACM Transactions on Graphics, Vol. 24, No. 3, 2005; A. Myronenko and X. Song, "Global active contour-based image segmentation via probability alignment", in Proceedings of IEEE Conference on Computer Vision and Pattern Recognition, Miami, USA, 2009; X. Bai et al., "Video snapcut: Robust video object cutout using localized classifiers", in Proceedings of ACM SIGGRAPH, New York, USA, 2009) and the depth of each object has to be modelled according to the surface of an object. In some work, these two processing steps are combined (M. Guttmann et al., "Semi-automatic stereo extraction from video footage", in Proceedings of IEEE International Conference on Computer Vision, Kyoto, Japan, 2009; X. Yan et al., "Depth map generation for 2d-to-3d conversion by limited user inputs and depth propagation", in Proceedings of 3DTV Conference: The True Vision - Capture, Transmission and Display of 3D Video, Antalya, Turkey, 2011). Here, an artist draws scribbles on objects or parts of image frames, which are propagated to produce dens depth maps. It is important to note that semi-automatic approaches most likely do not produce physically correct depth structures. Nevertheless, the resulting depth structures will appear plausible. There also exist several fully-automatic depth map generation techniques, for example based monocular cues, e.g. Structure-from-Motion (SfM) (M. Pollefeys et al., "Visual modeling with a hand-held camera", in International Journal of Computer Vision, Vol. 59, No. 3, 2004), Shape-from-Focus (SfF) and -Defocus (SfD) (P. Favaro, "Shape from focus and defocus: Convexity, quasiconvexity and defocus-invariant textures", in Proceedings of IEEE International Conference on Computer Vision, Rio de Janeiro, Brasil, 2007), Shape-from-Shading (SfSh) (R. Zhang et al., "Shape from shading: A survey", in IEEE Transactions on Pattern Analysis and Machine Intelligence, Vol. 21, No. 8, 1999; J.-D. Durou et al., "Numerical methods for shape-from-shading: A new survey with benchmarks", in Computer Vision and Image Understanding, Vol. 109, No. 1, 2008), and Shape-from-Texture (SfT) (D. Hoiem et al., "Automatic photo pop-up", in Proceedings of ACM SIGGRAPH, Los Angeles, USA, 2005; D. Feng et al., "Perception-based construction of 3d models from line drawings", in Proceedings of ACM SIGGRAPH, Boston, USA, 2006). A detailed overview of automatic depth map generation methods can be found in L. Zhang et al., "3d-tv content creation: Automatic 2d-to-3d video conversion", in IEEE Transactions of Broadcasting, Vol. 57, No. 2, 2011. Please note that fully-automatic depth map generation approaches often fail to compute accurate depth maps for high-quality stereo-view synthesis.

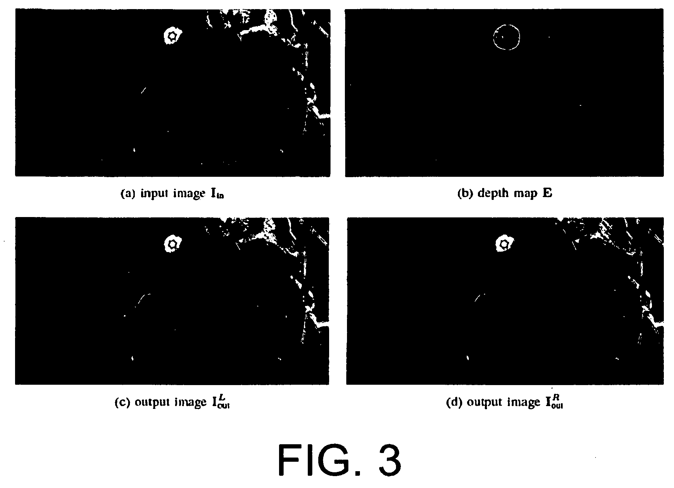

The depth estimation step is complemented by the synthesis of a new virtual view, which is a process that is subject to active research. Examples for synthesis are depth image-based rendering (DIBR) (C. Fehn (see above)) or layered-depth images (LDI) (J. Shade et al., "Layered depth images", in Proceedings of ACM SIGGRAPH, Orlando, USA, 1998). To synthesize a new view all of these approaches require a dense depth map, the generation of which is described above. A new view is generated by horizontally shifting of pixels in the 2D image according to their associated depth. This process can lead to holes in the resulting 3D image. In difference to DIBR, the layered approach LDI additionally stores a clean plate of the background for each image, which contains pixel colors as well as the associated depths of each pixel. This information is used to fill holes, however, as explained above, the creation of clean plates is a time consuming task. In this specification, an implementation of a depth image-based algorithm is used and, hence, it is required to mend the area around holes. An example of an image and its depth map as well as the resulting holes of the 3D image, if no hole-filling is applied, is depicted in Fig. 3.

As mentioned in the previous section, handling holes can be seen as a pre-processing or a post-processing step. As a consequence pre-processing steps to view synthesis can be thought of as hole prevention measures while post-processing can be thought of hole filling. Among methods of the latter category, simple row-wise pixel interpolation or extrapolation may be sufficient for closing if the holes are small (A. Smolic et al. (see above)). Larger holes are commonly patched using in-painting, which can based on (1) texture replication, (2) structure continuation, or (3) combinations of both (A. Smolic et al. (see above); Z. Tauber et al., "Review and preview: Disocclusion by inpainting for image-based rendering", in IEEE Transactions on Systems, Man, and Cybernetics, Part C: Applications and Reviews, Vol. 37, No. 4, 2007). Texture replication methods represent images as sets of overlapping patches. For hole-filling patches that contain holes are matched with hole-free patches that have a similar texture based on a distance metric (A. Criminisi et al. (see above); V. Caselles, "Exemplar-based image inpainting and applications", in Proceedings of International Congress on Industrial and Applied Mathematics, Vancouver, Canada, 2011). Boundary continuation algorithms, on the other hand, model images as a function in terms of curvature or gradients, where this model is forced to span over corrupted or missing pixels in order to restore them. This is achieved by solving optimization problems (M. Bertalmío et al. (see above); M. Bertalmío et al., "Navier-stokes, fluid dynamics, and image and video inpainting", in Proceedings of IEEE Computer Society Conference on Computer Vision and Pattern Recognition, Vol. 1, Kauai, USA, 2001; T. Chan and J. Shen, "Variational image inpainting", in Communications on Pure and Applied Mathematics, Vol. 58, No. 5, 2005) where pixels along the boundary of corrupted regions are set as boundary constraints. These method can be regarded as local, since a pixel influences only on its direct neighbours (V. Casseles (see above)). Since an in-depth discussion of in-painting is beyond the scope of this specification, interested readers are referred to Z. Tauber et al. (see above), T. Shih and R. Chang, "Digital inpainting-survey and multilayer image inpainting algorithms", in Proceedings of International Conference on Information Technology and Applications, Vol. 1, Sydney, Australia, 2005, and I. Fidaner, "A survey on variational image inpainting, texture synthesis and image completion", http://www.scribd.com/doc/3012627/, 2008.

Another building block of the proposed method in this specification is based on image warping. Image warping, sometimes also referred to as texture mapping, describes a set of algorithms, which perform geometric deformations on images according to specified constraints. For warping, images are regarded as continuous functions. However, due to the discrete nature of images, the deformed and continuous image domain will have to be discretized again after warping, e.g. using interpolation. Recently, warping has received great attention in applications such as image retargeting (Y. Wang et al., "Optimized scale-and-stretch for image resizing", in ACM Transactions on Graphics, Vol. 27, No. 5, 2008; P. Krähenbühl et al., "A system for retargeting of streaming video", in ACM Transactions on Graphics, Vol. 28, No. 5, 2009; Y. Guo et al., "Image retargeting using mesh parametrization", IEEE Transactions on Multimedia, Vol. 11, No. 5, 2009), i.e. the re-scaling of images and videos to a new size while preserving the aspect ratio of important regions of images, which is achieved by applying non-homogeneous transformations on images. These transformations are called non-homogeneous to highlight the fact, that not every image point undergoes an identical distortion (A. Shamir and O. Sorkine, "Visual media retargeting", in Proceedings of ACM SIGGRAPH ASIA, Yokohama, Japan, 2009). In M. Lang et al., "Nonlinear disparity mapping for stereoscopic 3d", in ACM Transactions on Graphics, Vol. 29, No. 4, 2010, it is shown how image warping can be harnessed in order to adapt the perceived depth of stereo video.

SUMMARY OF THE INVENTION

It is an object of the present invention to provide a method usable in synthesizing a stereoscopic image comprising a left view and a right view from a monoscopic image depicting a scene and a depth map comprising depth values associated to pixels of the monoscopic image, wherein the method allows to avoid the occurrence of holes during synthesis of the stereoscopic image. It is a further object of the present invention to provide a corresponding method and computer program.

In a first aspect of the present invention, a method usable in synthesizing a stereoscopic image comprising a left view and a right view from a monoscopic image depicting a scene and a depth map comprising depth values associated to pixels of the monoscopic image is presented, wherein the method comprises:

- providing warping data corresponding to the depth map and comprising warping values associated to pixels of the monoscopic image, wherein the warping data indicates how the monoscopic image is to be warped to synthesize at least one of the left view and the right view,
- detecting hole pixels comprising neighbouring pixels of the monoscopic image which, if warped according to the warping data, will result in a hole in the at least one of the left view and the right view,
- computing from the warping data altered warping data comprising altered warping values such that if the monoscopic image is warped according to the altered warping data to synthesize at least one of the left view and the right view, no holes will result in the at least one of the left view and the right view,

wherein the computing comprises setting-up and optimizing an energy function that is based on warping values comprised by the warping data,
wherein the energy function comprises at least one of the following energy terms:

- a similarity preserving energy term that penalizes for a pixel of the monoscopic image a difference between the altered warping value associated to the pixel and the warping value associated to the pixel, and
- a smoothness preserving energy term that penalizes for neighbouring pixels of the monoscopic image which, if warped according to the warping data, do not result in an overlap in the at least one of the left view and the right view, a difference between (i) a first difference between the altered warping values associated to the neighbouring pixels and (ii) a second difference between the warping values associated to the neighbouring pixels.

The present invention is based on the idea that by setting-up and optimizing an energy function that is based on warping values comprised by the warping data, altered warping data can be computed very flexibly from the warping data such that if the monoscopic image is warped according to the altered warping data no holes will result in the at least one of the left view and the right view.

The warping data may preferentially comprise at least one warping map that may be calculated from the depth map as described with reference to Eq. (2) and (3) below. In this case, which assumes a parallel configuration of the (virtual) cameras that correspond to the stereoscopic image, the warping values represent horizontal shift values. It may, however, also be foreseen in certain embodiments that the warping values represent shifts in both the horizontal and the vertical direction. This may, for example, be the case when a converged camera configuration is assumed instead of the above-mentioned parallel one.

It is preferred that detecting the hole pixels comprises comparing a difference between the warping values associated to the neighbouring pixels to a predetermined threshold.

It is further preferred that the optimization of the energy function is subject to a hole-filling constraint that fixes the altered warping values associated to the hole pixels, wherein the fixing comprises:

- selecting from the detected hole pixels a set of adjoined hole pixels,
- determining from the set of adjoined hole pixels a first border pixel bordering the set of hole pixels on a first side and a second border pixel bordering the set of hole pixels on a second side, and
- fixing the altered warping values associated to the set of adjoined hole pixels to be (i) equal to the warping value associated to the first border pixel, if the depth value associated to the first border pixel indicates a smaller scene depth than the depth value associated to the second border pixel, and (ii) equal to the warping value associated to the second border pixel, if the depth value associated to the second border pixel indicates a smaller scene depth than the depth value associated to the first border pixel.

It is preferred that the similarity preserving energy term and/or the smoothness preserving energy term comprises a saliency weighting that penalizes for pixels of the monoscopic image an alteration of the warping values associated to some pixels more than an alteration of the warping values associated to other pixels of the monoscopic image.

In one preferential approach, the saliency weighting may penalize for a pixel of the monoscopic image an alteration of the warping value associated to the pixel more when the depth value associated to the pixel indicates a smaller scene depth than when the depth value associated to the pixel indicates a larger scene depth. In alternative approaches, however, the saliency weighting may also be based on characteristic local features of the monoscopic image, for example, on color, on texture, or on spatial and/or temporal frequency.

It is preferred that the warping data comprises left view warping data comprising left view warping values for synthesizing the left view and right view warping data comprising right view warping values for synthesizing the right view, wherein the method comprises providing disparity data corresponding to the depth map and comprising disparity values associated to pixels of the monoscopic image, wherein the computing comprises computing from the left view warping data altered left view warping data comprising altered left view warping values and from the right view warping data altered right view warping data comprising altered right view warping values, and wherein the energy function comprises a disparity preserving energy term that penalizes for a pixel of the monoscopic image a difference between (i) a difference between the altered right view warping value associated to the pixel and the altered left view warping value associated to the pixel and (ii) the disparity value associated to the pixel.

It is preferred that the energy function is optimized by solving a system of linear equations.

It is further preferred that the energy function depends on only a subset of the warping values comprised by the warping data.

It is preferred that the subset of the warping values is determined by constructing a tree structure for the monoscopic image, wherein the tree structure comprises leaf nodes at different levels of tree depth, wherein each leaf nodes comprises corners at pixels of the monoscopic image and contains pixels of the monoscopic image, and wherein the subset of the warping values corresponds to the warping values associated to corner pixels, which are the pixels that correspond to the corners of the leaf nodes.

The tree structure may preferentially be a quadtree structure, in which each leaf node has a rectangular shape, in particular, a square shape, and comprises four corners. However, it may also be foreseen in certain embodiments that the tree structure is based on leaf nodes of another shape, e.g. a triangular shape.

It is further preferred that the method comprises providing disparity data corresponding to the depth map and comprising disparity values associated to pixels of the monoscopic image, and wherein constructing the tree structure comprises splitting a leaf node if at least one of the following criteria is fulfilled:

- the difference between a minimum value of the depth values associated to neighbouring pixels of the one or more pixels contained by the leaf node and a maximum value of the depth values associated to the neighbouring pixels of the one or more pixels contained by the leaf node is above a predetermined threshold,
- the one or more pixels contained by the leaf node comprise one or more hole pixels,
- a difference between a minimum value of the disparity values associated to the one or more pixels contained by the leaf node and a maximum value of the disparity values associated to the one or more pixels contained by the leaf node is above a predetermined threshold, or
- an edge length of the leaf node is above a predetermined maximum edge length.

It is preferred that constructing the tree structure comprises balancing the tree structure such that no leaf nodes that share a common edge will differ in tree depth by more than one level.

It is further preferred that, if the tree structure comprises a T-junction resulting from neighbouring leaf nodes at different levels of tree depth, the optimization of the energy function is subject to a T-junction constraint that ensures that the altered warping value associated to a corner pixel at the T-junction corresponds to a linear interpolation of the altered warping values associated to the two corner pixels neighbouring the T-junction corner pixel at opposite sides of the T-junction.

It is preferred that the altered warping values associated to the one or more pixels contained by a leaf node are bilinearly or cubically interpolated from the altered warping values associated to the corner pixels of the leaf node.

In a second aspect of the present invention, an apparatus usable in synthesizing a stereoscopic image comprising a left view and a right view from a monoscopic image depicting a scene and a depth map comprising depth values associated to pixels of the monoscopic image is presented, wherein the apparatus comprises:

- a providing unit for providing warping data corresponding to the depth map and comprising warping values associated to pixels of the monoscopic image, wherein the warping data indicates how the monoscopic image is to be warped to synthesize at least one of the left view and the right view,
- a detecting unit for detecting hole pixels comprising neighbouring pixels of the monoscopic image which, if warped according to the warping data, will result in a hole in the at least one of the left view and the right view,
- a computing unit for computing from the warping data altered warping data comprising altered warping values such that if the monoscopic image is warped according to the altered warping data to synthesize at least one of the left view and the right view, no holes will result in the at least one of the left view and the right view,

wherein the computing comprises setting-up and optimizing an energy function that is based on warping values comprised by the warping data,
wherein the energy function at least one of the following energy terms:

- a similarity preserving energy term that penalizes for a pixel of the monoscopic image a difference between the altered warping value associated to the pixel and the warping value associated to the pixel, and
- a smoothness preserving energy term that penalizes for neighbouring pixels of the monoscopic image which, if warped according to the warping data, do not result in an overlap in the at least one of the left view and the right view, a difference between (i) a first difference between the altered warping values associated to the neighbouring pixels and (ii) a second difference between the warping values associated to the neighbouring pixels.

In a third aspect of the invention, a computer program comprising program code for performing the steps according to the method defined in any of claims 1 to 12, when the computer program is executed by a computer, is presented.

It shall be understood that the method of claim 1, the apparatus of claim 13 and the computer program of claim 14 have similar and/or identical preferred embodiments, in particular, as defined in the dependent claims.

It shall be understood that a preferred embodiment of the invention can also be any combination of the dependent claims with the respective independent claim.

BRIEF DESCRIPTION OF THE DRAWINGS

These and other aspects of the invention will be apparent from and elucidated with reference to the embodiments described hereinafter. In the following drawings:

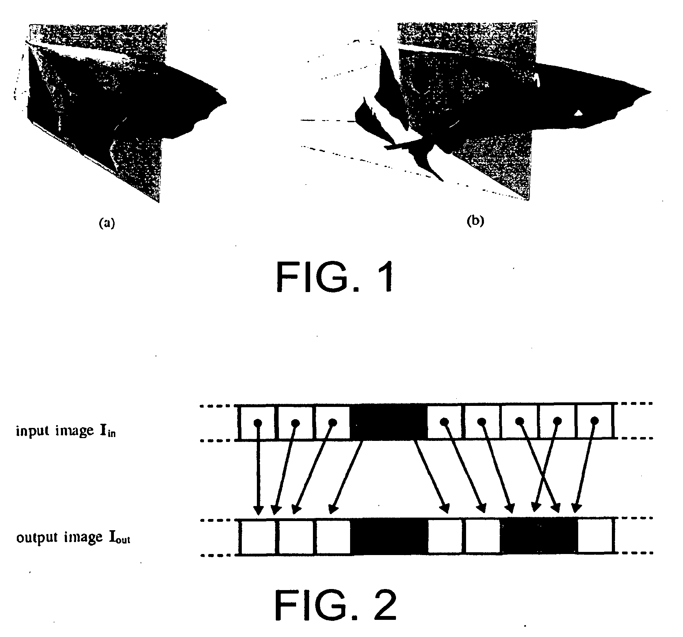

Fig. 1      shows an example of a scene with varying depth budget, (a) small and (b) large depth budget. The gray plane indicates the zero-parallax plane.

Fig. 2      shows forward rendering used in DIBR. The top row depicts a partial row of the input image, the bottom row is the corresponding row in the output image, and the arrows denote the direction of the horizontal shift. Holes in the output image $I_{out}$ (dark squares on the left in the bottom row) appear if neighbouring pixels in $I_{in}$ (dark squares in the top row) are shifted in opposite directions. Overlaps (dark squares on the right in the bottom row) on the other hand occur since a foreground object is shifted less than a neighbouring background object.

Fig. 3      shows that the input of the DIBR algorithm is a texture image, depicted in (a), and its corresponding depth map $\mathbf{E}$, shown in (b). Here, dark values in $\mathbf{E}$ correspond to large distance from the viewer. Shifting pixels in order to synthesize new views for stereo conversion, inevitably, leads to holes arising due to lack of knowledge about the true scene structure. (c) Left synthesized view, (d) right synthesized view.

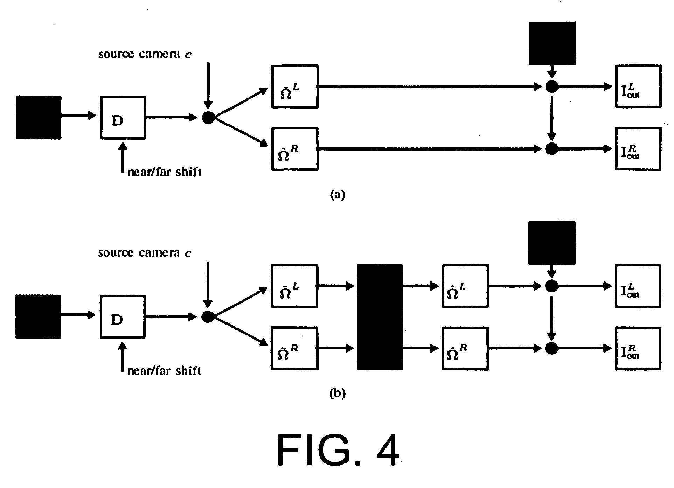

Fig. 4      shows schematics of the DIBR and warping pipeline. (a) An image $\mathbf{I}_{in}$ and a depth map $\mathbf{E}$ are used as input (dark squares). Given the near and far shift values $d_n$ and $d_f$, a disparity map $\mathbf{D}$ is computed. Depending on the selected source camera $c$ two warping maps $\tilde{\Omega}^L$ and $\tilde{\Omega}^R$ are generated from $\mathbf{D}$. In conjunction with $\mathbf{I}_{in}$ and the warping maps, the corresponding stereo view $\mathbf{I}_{out}^L$ and $\mathbf{I}_{out}^R$ are rendered. (b) The warping algorithm (dark rectangle) is embedded into the actual depth image-based rendering. It alters the warping maps $\tilde{\Omega}^L$ and $\tilde{\Omega}^R$ to $\hat{\Omega}^L$ and $\hat{\Omega}^R$, which produce a visually similar render output but without the holes.

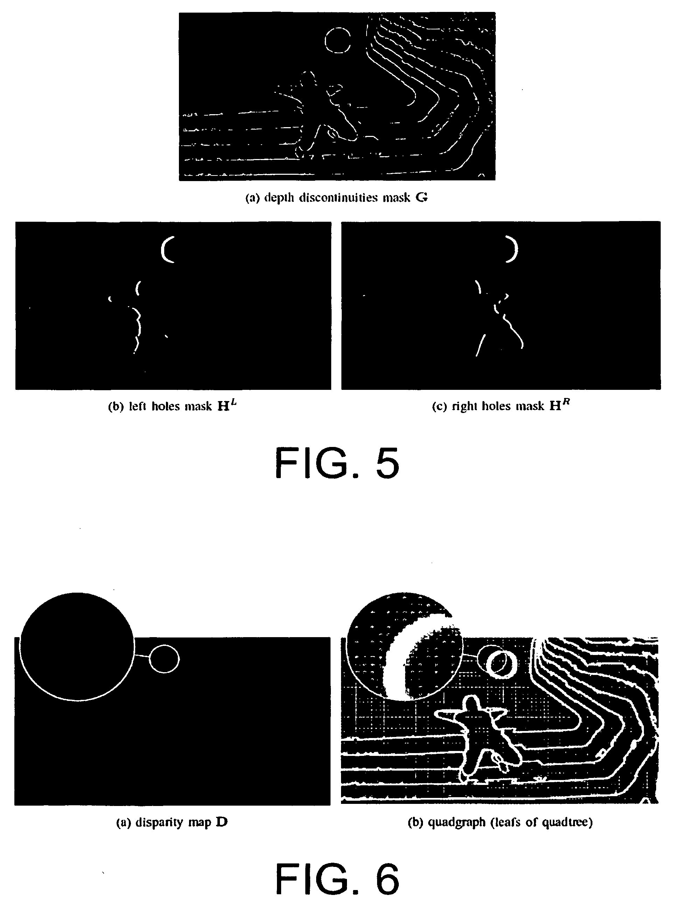

Fig. 5      shows depth discontinuities mask $\mathbf{G}$ is the result of an edge detection applied to disparity map $\mathbf{D}$ and indicates depth changes in the scene. In conjunction with the holes masks $\mathbf{H}^L$ and $\mathbf{H}^R$, these mask are used to identify those edges between neighbouring pixels that may be deformed. The masks depicted here are associated to the input image in Fig. 3.

Fig. 6      shows (a) an example of a disparity map. The intensity of gray in $\mathbf{D}$ indicates the amount of disparity. (b) The leaf level of the corresponding quadtree structure. Here, every quad is split if (1) it contains hole pixels, (2) it contains pixels along depth discontinuities, (3) the relative difference of disparity inside the quad is above a threshold $d_{max}$, or (4) if the edge length if above $l_{max}$. The minimum edge length of a quad is one pixel.

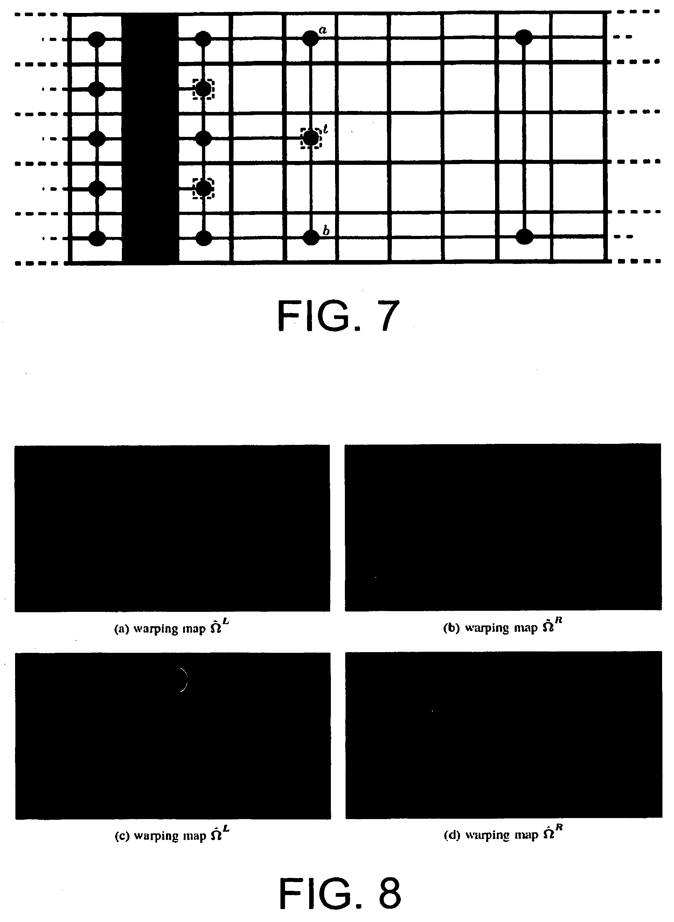

Fig. 7      shows an excerpt of a quadtree superimposing an image along a hole (dark pixels). The pixel grid of the image is depicted by the black squares, the leafs of the quadtree are shown as dark lines. The four corners of each quad are coinciding with pixel centers (dark dots). While in the full linear system each pixel in the image is represented by one unknown, the reduced linear system defines variables only for those pixels that are corners of quads. In order to avoid artefacts, special attention needs to be paid to T-junctions, which are shown as dark dots within a stippled square.

Fig. 8      shows the initial warping maps generated by the DIBR-algorithm, which produce holes during rendering, are depicted in the top row. The bottom row depicts the updated warping maps produced by the warping algorithm, which produce a visually similar output but less the holes.

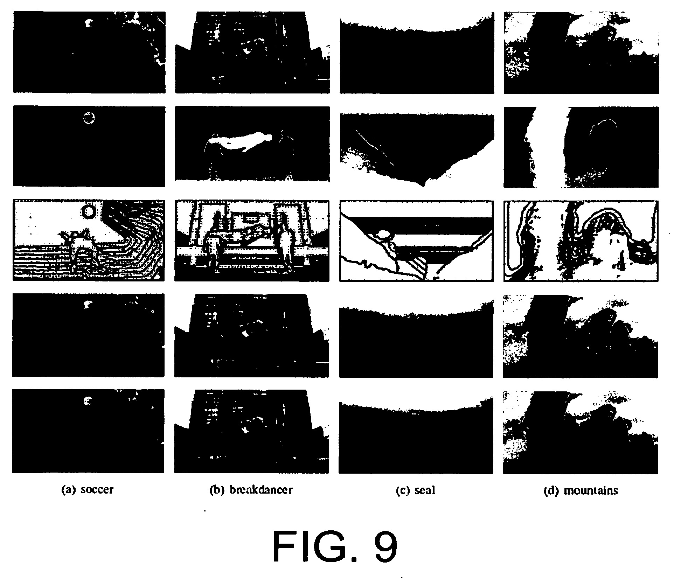

Fig. 9      shows examples. Input images are depicted in the first row and their corresponding quadtree segmentation in the second row. The third and the last row show the anaglyph 2D to 3D conversion results without and with warping, respectively.

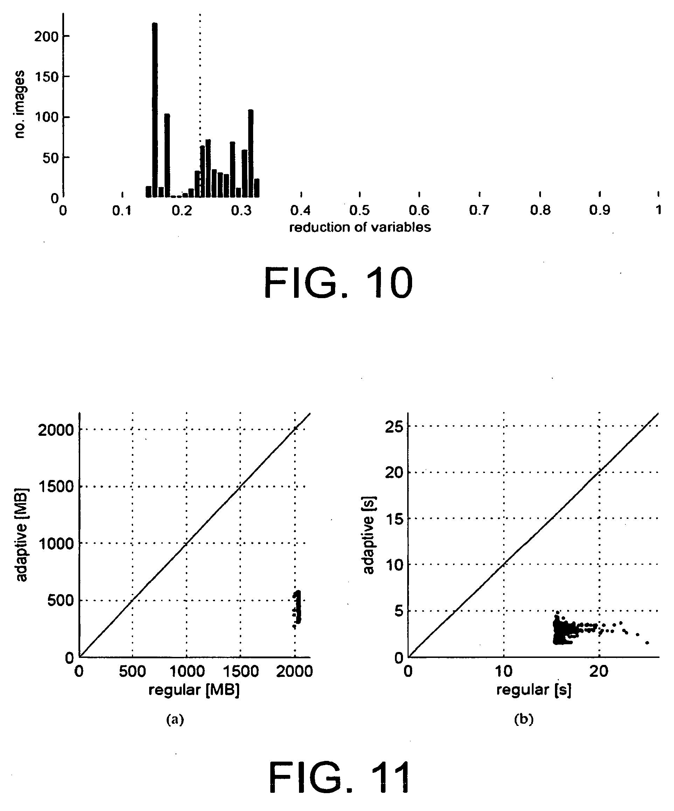

Fig. 10      shows a reduction of unknowns in the system of linear equations $\mathbf{Ax} = \mathbf{b}$ expressed as the ratio of number of variables in the reduced system to number of pixels in the corresponding image. This ratio is computed for all images in the test data sets described in the text. All ratios are sorted into 100 bins. On average, the number of unknowns is reduced by a factor 0.231 relative to the total number of pixels. The average is depicted by the vertical dashed line.

Fig. 11 shows a comparison of time and memory complexity between the regular grid-based and the adaptive grid-based approach. (a) Comparison of memory usage. (b) Comparison of run-time. The diagonals in (a) and (b) mark where both algorithms are on par. Points below the diagonal indicate that the adaptive approach is favourable over the regular one and the converse is true for points above the diagonals. The distance of points to the diagonal implies the extent to which one algorithm is more efficient than the other.

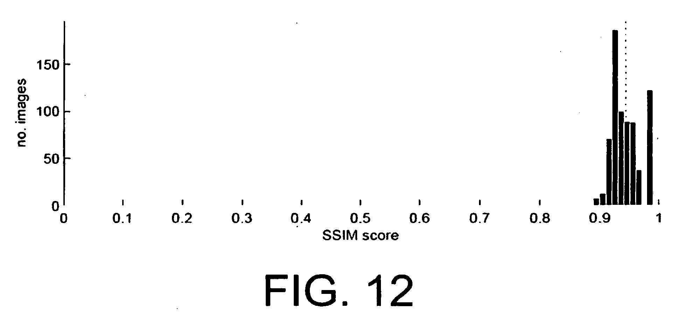

Fig. 12 shows a comparison of the output of both algorithms. An average SSIM score of 0.943 was achieved, which is denoted by the vertical dashedline.

DETAILED DESCRIPTION OF EMBODIMENTS

III. THEORETICAL BACKGROUND

A. Depth Image-based Rendering

If the 3D structure of a scene is known, generating a second view for a given image in order to form a stereo frame would be straightforward. Unfortunately, however, this knowledge about the structure is not available in the vast majority of cases.

In order to circumvent this problem, depth image-based rendering (DIBR) (C. Fehn (see above)) exploits the artificially created depth maps mentioned in the previous section in order to synthesize a virtual view. Conceptionally, the algorithm back-projects pixels into 3D world space, using the associated information from the depth maps, before projecting them back into a virtual camera, which is positioned closely around the first camera.

In a special case, in which the virtual camera is in a 1D parallel arrangement relative to the first camera and is assumed to have identical intrinsic parameters, the second view can be synthesized by horizontal shifting of pixels exploiting disparity (D. Tian et al., "View synthesis techniques for 3d video", in Proceedings of SPIE Applications of Digital Image Processing XXXII, Vol. 7443, San Diego, USA, 2009).

In contrast to the binocular disparity, which is expressed as angles, the disparity used in stereo View synthesis techniques for 3d video conversion is measured in pixels. Additionally, only the horizontal disparity is used for view synthesis, as vertical disparity has been found to cause nausea and fatigue (J. Choi et al., "Visual fatigue modeling and analysis for stereoscopic video", in Optical Engineering, Vol. 51, No. 1, 2012).

If the disparity of a pixel in the left and its corresponding counterpart in right view of a stereo image is zero, these pixels will appear in the zero-parallax or projection plane. Pixel pairs with a negative disparity will appear in front of the screen and pairs with a positive disparity behind it. The maximum and minimum disparity values of a scene are referred to as far shift $d_f$ and near shift $d_n$, respectively. The sum of the absolutes of the near shift and the far shift value

$$b = |d_n| + |d_f| \qquad (1)$$

is known as depth budget. Please note that $d_n < d_f$ has to be valid. If that were not the case, background objects could appear in front of foreground object. The effect of a varying depth budget for a scene is depicted in Fig. 1.

For a given depth map $\mathbf{E}$, the relation of the depth $e_i$ at pixel $i$ to disparity $d_i$ in disparity map $\mathbf{D}$ can now be simply expressed linearly as

$$d_i = \frac{d_n - d_f}{e_{max}} e_i + d_f , \qquad (2)$$

where $e_{max}$ denotes the maximum allowed depth, e.g. 255 for 8-bit depth maps. Please note, that the actual, geometrically correct relation between depth and disparity is nonlinear. However, we intend to create plausible output rather than output that is geometrically correct.

In a stereo conversion, the input image $\mathbf{I}_{in}$ is typically set to be the image of the source camera $c$, where $c$ can be the left (L), the right (R), or the middle camera (M). In the first two configurations, the left or right image of a stereo frame is set equal to $\mathbf{I}_{in}$, respectively, and the missing frame is filled with the synthesized image $\mathbf{I}_{out}$. In the third case two output images $\mathbf{I}_{out}^L$ and $\mathbf{I}_{out}^R$ are generated, one for the left and one for right view. Depending on the configuration of the source camera, the shifting direction of pixels has to be adapted. For that purpose, let $\tilde{\Omega}^L$ and $\tilde{\Omega}^R$ denote warping maps, which indicate the magnitude and direction of the horizontal shift for each pixel $i$ in $\mathbf{I}_{in}$ that is necessary to create the left and right image of a stereo frame, respectively. The warping maps can be computed as

$$(\tilde{\Omega}^L, \tilde{\Omega}^R) = \begin{cases} (0, \mathbf{D}), \text{ if } c = \mathbf{L} \\ (-\frac{1}{2}\mathbf{D}, \frac{1}{2}\mathbf{D}), \text{ if } c = \mathbf{M}, \\ (-\mathbf{D}, 0), \text{ if } c = \mathbf{R} \end{cases} \tag{3}$$

which always preserves the disparity, since

$$\mathbf{D} = \tilde{\Omega}^R - \tilde{\Omega}^L. \tag{4}$$

Using a forward mapping scheme, the virtual left image of a stereo frame is created by shifting each pixel $\mathbf{x}_i$ in input image $\mathbf{I}_{in}$ to its new position in $\mathbf{I}_{out}^L$, such that

$$\mathbf{I}_{out}^L(\mathbf{x}_i + (\tilde{\Omega}_i^L, 0)^T) = \mathbf{I}_{in}(\mathbf{x}_i), \tag{5}$$

and analogously for the right view

$$\mathbf{I}_{out}^R(\mathbf{x}_i + (\tilde{\Omega}_i^R, 0)^T) = \mathbf{I}_{in}(\mathbf{x}_i), \tag{6}$$

At depth discontinuities in the depth map $\mathbf{E}$ it can happen, that a pixel is shifted over another, effectively occluding it. This is called an overlap and is indicated by the dark squares on the right in the bottom row in Fig. 2. Another, more problematic, case arises at depth discontinuities, if neighbouring pixels in the source image $\mathbf{I}_{in}$ are shifted into diverging directions, which leads to holes in the stereo images $\mathbf{I}_{out}^L$ and $\mathbf{I}_{out}^R$. This is often also referred to as disocclusion and is indicated by the dark squares on the left in the bottom row in Fig. 2. If the holes are very narrow, e.g. one pixel wide, interpolation or extrapolation can be a legitimate and simple option to fill holes without creating visually disturbing artefacts or smearing. However, a large part of the holes that arise in practice require a more sophisticated approach in order to fill them. The entire pipeline of the DIBR algorithm is schematically outlined in Fig. 4a.

The following section will explain how to use image warping to address the problem of holes, that may appear in the synthesized view using depth-based image rendering and which cannot be closed with interpolation without introducing visual artefacts.

B. Image Warping

An $m \times n$ image is represented as a directed graph or mesh grid $\mathbf{G} = (\mathbf{V}, \mathbf{E}, \mathbf{Q})$, where $\mathbf{V} = [v_0,...,v_N]$ is a list of vertices $v_i \in \mathfrak{R}^2$, the set of directed edges is denoted as $\mathbf{E}$, and quads or faces as $\mathbf{Q}$. In this setting, each pixel in the image is represented by a vertex in $\mathbf{G}$. However, this grid size can be chosen arbitrarily from sub- to superpixel resolution, depending on the application and computational feasibility.

The image is deformed by applying a warping function $F$ on the set of vertices, such that $\mathbf{V'} = [v'_0,...,v'_N] = F(\mathbf{V})$ yields a new set of vertices. The behaviour of $F$ is controlled by its parameter matrix $\Omega = [\mathbf{p}_0,...,\mathbf{p}_N]$. Since this kind of image warping is restricted to planar deformation, the warping parameters $\mathbf{p}_i$ will be at most two dimensional, i.e. they store an offset in x- and in y-direction for each vertex $in$ $\mathbf{V}$. In the case of stereo conversion, which assumes as parallel configuration of the two cameras, $\Omega$ will only store an offset $x$ in horizontal direction.

The above mentioned constraints, which characterize the desired behaviour of an image warp, are expressed as an objective functional $E(\Omega)$. If the warping is more complex it is common to split the error functional $E$ into several smaller functions, each encoding its own characteristic of the warp. This could be, for example, the ability to preserve straight lines in the image or other external information that may important to the application at hand. The final objective function can then be expressed as

$$E(\Omega) = \sum_i \lambda_i E_i(\Omega) \,, \qquad\qquad (7)$$

where $\lambda_i \geq 0$ denotes weights. The objective is to determine those parameters $\hat{\Omega}$ for warping function $F$ such that

$$\arg\min_{\hat{\Omega}} E(\Omega) \,. \qquad\qquad (8)$$

These optimization problems are frequently subject to boundary constraints, for example in order to preserve the rectangular shape of an image or if a subset of pixels is required to retain a fixed position after warping. The solution will be optimal in terms of the local behaviour of the gradient of the warping function. The output image is then determined by

$$I_{out}(\Omega(\mathbf{x}_i)) = I_{in}(\mathbf{x}_i) \,. \qquad\qquad (9)$$

It is now time to take a closer look at how image warping can be exploited for hole-filling in the process of depth image-based rendering.

## IV. REGULAR GRID-BASED APPROACH

The approach for hole-filling using image warping, which is portrayed in this section, is partially based on previous work of (O. Wang et al. (see above)). However, in contrast to their method, our approach is not required to approximate a disparity map, since it is readily available.

Our algorithm, as schematically outlined in Fig. 4b, works as follows. Initially, the pipeline of DIBR is followed. Using the depth-to-disparity mapping defined in Eq. (2) and a specified depth budget $b$, which is defined by the near shift $d_n$ and far shift $d_f$, the depth map $\mathbf{E}$ is converted to a disparity $\mathbf{D}$. Then, depending on the selected source camera $c$, two warping maps $\tilde{\Omega}^L$ and $\tilde{\Omega}^R$ are computed from $\mathbf{D}$ as defined by Eq. (3). An analysis of the warping maps yields a pair of binary masks, $\mathbf{H}^L$ and $\mathbf{H}^R$, which indicate where the texture output images will have holes. This information is in the coordinate frame of the input image $I_{in}$ and can, thus, be directly incorporated into an optimization problem, which will alter the initial warping maps to yield a new pair of warping maps, $\hat{\Omega}^L$ and $\hat{\Omega}^R$. These updated maps are applied in the remaining DIBR pipeline to produce a render output that is visually very similar to that of the initial warping maps, but does not contain holes.

### A. Definitions and notation

Following the notation introduced in section III-B, an image I is represented as a regular, 4-connected grid with directed edges where each image pixel corresponds to a vertex in the grid.

The objective is to find a pair of warping maps $\hat{\Omega}^L$ and $\hat{\Omega}^R$, such that no holes occur in textures of the left and right stereo view $I_{out}^L$ and $I_{out}^R$ while at the same time the render output is still visually similar to the output of the initial warping maps and also preserves the disparities $\mathbf{D}$. The warping maps modify only the $x$-coordinates of pixels, since a parallel aligned camera arrangement is assumed.

To find these warps, an energy minimization problem is defined. The final energy $E$ function will be composed linearly of three types of energy terms. The first type, $E_s$, preserves the visual appearance by creating a bonding energy between neighbouring pixels. The second type, $E_d$, will force the stereo disparity to be as close as possible to the disparity map $\mathbf{D}$, and, the third type, $E_a$, makes sure that the absolute warping values remain similar to those defined in the initial warping maps. Finally, these energies are combined with the information about holes gained from the mask $\mathbf{H}^L$ and $\mathbf{H}^R$ to find the warps that avoid holes.

Additionally, a saliency map is used to indicate the importance of pixels. Basically, it is the idea to hide the image deformation in those regions of an image that are not that important while leaving important (salient) regions intact. Generally, the closer an object is to the user, the more important it is. This heuristic is used in a simple mapping to transform the depth map $\mathbf{E}$ into a saliency map $\mathbf{S}$, which is defined as

$$\mathbf{S}_i = \frac{s_{max} - s_{min}}{e_{max}} \mathbf{E}_i + s_{min} \,, \qquad\qquad (10)$$

where scalars $s_{min}$ and $s_{max}$ denote the minimum and maximum allowed saliency, respectively. In our setting we use $s_{min} = 0.1$ (to avoid numerical instabilities) and $s_{max} = 1$. However, our method is not restricted to this kind of saliency map and others, depending on the application, can be applied as well (S. Goferman et al., "Context-aware saliency detection", in Proceedings of IEEE Conference on Computer Vision and Pattern Recognition, San Francisco, USA, 2010; M. Cheng et al., "Global contrast based salient region detection", in Proceedings of IEEE Conference on Computer Vision and Pattern Recognition, Colorado Springs, USA, 2011).

B. Detecting Holes And Depth Discontinuities

In an early version, our algorithm would detect the holes that were described in section III-A, by generating two binary masks after rendering to indicate which pixels have a color value assigned to them in the output image $\mathbf{I}_{out}^L$ and $\mathbf{I}_{out}^R$ and which have not. In other words, pixels without any value do not have any pixels in the input image $\mathbf{I}_{in}$ pointing to them and, thus, are marked as holes.

Given these masks, and without yet going into the details of how, a second pair of warping maps $(\hat{\Omega}^L, \hat{\Omega}^R)$ was derived, which would then be used to warp $\mathbf{I}_{out}^L$ and $\mathbf{I}_{out}^R$ in order to close the holes. However, this approach makes it necessary to render the image two times, which not only increases run-time but also degrades the quality of the image.

This problem can be avoided, however, if holes are not detected after the rendering takes place but instead before any input $\mathbf{I}_{in}$ enters the rendering stage. To be able to do that, it is necessary to look at when holes in the texture arise.

As mentioned in the previous section, holes in the output image $\mathbf{I}_{out}$ will be caused by those neighbouring pixels $i$ and $i + 1$ in the input image $\mathbf{I}_{in}$, for which the difference of magnitude of their associated shifts is above a threshold $t$. A mask is computed for each view of the stereo frame, denoted as $H^L$ and $H^R$, such that

$$\mathbf{H}_i^V = \begin{cases} 1, \text{ if } \nabla_x \Omega_i^V > t \\ 0, \text{ otherwise} \end{cases}, \qquad (11)$$

where $V \in \{L,R\}$ indicates the left or right view, respectively, and $\nabla_x \Omega$ denotes the x-component of the gradient of $\Omega$. The value of $t$ varies depending on how much interpolation can be used before the specific rendering algorithm displays holes. In our case holes with a width of one pixel or less will be linearly interpolated, and, hence, we use $t = 1$. Examples of holes masks are depicted in Fig. 5.

C. Hole-Filling

Having identified those regions, in which holes will occur, the next step will be to convert the holes masks into a series of spans, in a fashion similar to run-length encoding (RLE). A span is defined as a sequence of consecutive hole pixels in a row, for which the location of first pixel before and after the hole is stored as starting $a$ and ending point $b$.

Additionally, either the starting or the ending point will be marked as fixed, depending on which is closer to the viewer, i.e.

$$\Phi(a,b) = \begin{cases} a, \text{ if } \mathbf{E}(a) > \mathbf{E}(b) \\ b, \text{ otherwise} \end{cases}. \qquad (12)$$

Fixing one side of a span is necessary, as the other side will be pulled towards it, which effectively closes the hole. Pulling of pixels is achieved by assigning the warping value of the fixed span point to all the other pixels in that span. Let $(a,b)$ denote a hole span and assume for the moment that $a$ is marked as fixed, we then define the hole-filling boundary constraint for the current span as

$$\hat{\Omega}(i) = \tilde{\Omega}(a), \qquad (13)$$

where $a \leq i \leq b$. This means, in other words, that the warping values of pixels inside a hole span are fixed to the warping value of a, which guarantees that these pixels will maintain a relative pair-wise distance of one pixel after warping, which will avoid any holes. The error that is introduced by this constraint will be hidden by spreading it over neighbouring non-hole pixels as will be explained later. The case, where b is fixed, can be constructed analogously. Please note, that the hole spans of the left holes mask $\mathbf{H}^L$ define only boundary constraints for the left warping map $\hat{\Omega}^L$, and spans in $\mathbf{H}^R$ only for the right warping map $\hat{\Omega}^R$.

Though these constraints close those holes marked in $\mathbf{H}^L$ and $\mathbf{H}^R$, new holes would occur at the side of the hole spans. The next sections will introduce energy terms, which define a kind of cohesive attraction between pixels, which serves to pull the background to the foreground and, thus, avoid new holes in the texture while also preserving disparity.

## D. Preserving Disparity

Closing holes in one view is achieved by pulling background pixels to foreground pixels. However, if the hole-filling warps are applied to each view separately, the depth structure defined in a depth map $\mathbf{E}$ is no longer preserved. Visual discomfort can arise as a consequence, if the perceived scene depth differs greatly from the expected depth, which viewers have gained through experience. Under the assumption that this principle has not been violated in the provided depth map $\mathbf{E}$, a disparity preserving energy term $E_d$ is used to enforce disparity even after warping. This energy is defined as

$$E_d(\mathbf{\Omega}^L, \mathbf{\Omega}^R) = \sum_i \left\| (\mathbf{\Omega}_i^R - \mathbf{\Omega}_i^L) - \mathbf{D}_i \right\|^2 . \tag{14}$$

Minimizing this energy term with respect to its parameters $\Omega^L$ and $\Omega^R$ forces pixels $i$ in the left and right stereo view to shift only relative to their disparity $\mathbf{D}_i$.

For pixels that have fixed location, assigned by the hole-filling boundary constraints described above, this energy term ensures that the corresponding pixel in the other view will be shifted accordingly, so that the global disparity will be preserved. However, this term does not forbid solutions that have an arbitrary offset from the specified depth budget b, since only a relative difference - the disparity - will be preserved.

## E. Preserving Similarity

In order to not only preserve the disparity $\mathbf{D}$ but also the absolute depth budget b, another energy term $E_a$ is added. This term controls the similarity of the final hole-free warping maps to the initial warp $\tilde{\Omega}^L$ and $\tilde{\Omega}^R$ defined in Eq. (3). There exists one energy for the left view and one for the right view, defined as

$$E_a^V(\mathbf{\Omega}^L, \mathbf{\Omega}^R) = \sum_i \mathbf{S}_i \left\| \mathbf{\Omega}_i^V - \mathbf{\Omega}_i^V \right\|^2 , \tag{15}$$

where $V \in \{L,R\}$ denotes the left and right view, respectively.

While the energy term from the previous section preserves the relative disparity between corresponding pixels in the left and right view, this energy term prevents the warp from deviating from the initial warping too much. It will preserve the disparity in terms of absolute shift amounts and directions in image regions with high saliency, while allowing a larger slack in areas with low saliency.

## F. Preserving Smoothness

In addition, a smoothness preserving energy term $E_s$ is used. This term serves to keep the deformation of the regular grid to a minimum and directs errors introduced by the deformation, which are inevitable, to less salient regions of the image by penalizing local distortion everywhere except at overlaps.

Overlaps can be regarded as the opposite case of holes. They occur since foreground object are shifted less than background objects or even into colliding directions, which means that the relative warping differences between pixels $i$ and their right neighbours $j = i + 1$ are positive, i.e.

$$\mathbf{\Omega}_i^V - \mathbf{\Omega}_j^V > 0 . \tag{16}$$

Please note that the information on overlaps is contained in a mask **G**, which stores depth discontinuities. The depth discontinuities are extracted by applying a standard edge detection algorithm on the disparity map **D**. Overlaps can then be conveniently identified in **G** as those pixels which are not marked in holes masks **H**. An example of a depth discontinuity map is depicted in Fig. 5.

The edge between pixels $i$ and its neighbouring pixel $j$ is allowed to be deformed, if it is an overlap and if it is located on a depth discontinuity. This requirement can be expressed as

$$\psi(i,j) = (\mathbf{G}_i > 0 \vee \mathbf{G}_j > 0)$$
$$\wedge (\mathbf{\Omega}_i^L - \mathbf{\Omega}_j^L > 0) \qquad . \tag{17}$$
$$\wedge (\mathbf{\Omega}_i^R - \mathbf{\Omega}_j^R > 0)$$

The energy term is then defined as a saliency-weighted sum over the local 4-connected neighbourhoods of pixels, which penalizes distortion everywhere except at overlaps, and can be expressed as

$$E_s^V(\mathbf{\Omega}^L, \mathbf{\Omega}^R) = \sum_i \mathbf{S}_i \sum_{j \in N(i)} \delta_{ij} \left\| (\mathbf{\Omega}_i^V - \mathbf{\Omega}_j^V) - (\tilde{\mathbf{\Omega}}_i^V - \tilde{\mathbf{\Omega}}_j^V) \right\|^2 . \tag{18}$$

where, as before, superscript $V \in \{L,R\}$ indicates the energy term for the left and right view, respectively. Weight $\delta_{ij}$ controls the strength of the edge between pixels $i$ and its neighbour $j$, i.e. how much the current edge is allowed to be stretched or squeezed, and is given as

$$\delta_{ij} = \begin{cases} \varepsilon, \text{ if } \psi(i,j) \text{ is satisfied} \\ 1, \text{ otherwise} \end{cases} , \tag{19}$$

where scalar $\varepsilon$ is chosen to be a small positive value instead of zero for numerical stability as it might decrease the rank of the coefficients matrix in the system of linear equations. The construction of this system of linear equations will be described in the following section.

G. Error Minimization

The final optimization problem can now be expressed as

$$\underset{\hat{\mathbf{\Omega}}^L, \hat{\mathbf{\Omega}}^R}{\operatorname{argmin}} \quad E(\mathbf{\Omega}^L, \mathbf{\Omega}^R), \tag{20}$$

subject to    hole-filling constraints (13)

where the energy is defined as

$$E(\mathbf{\Omega}^L, \mathbf{\Omega}^R) = w_s E_s^L(\mathbf{\Omega}^L, \mathbf{\Omega}^R)$$
$$+ w_s E_s^R(\mathbf{\Omega}^L, \mathbf{\Omega}^R)$$
$$+ w_a E_a^L(\mathbf{\Omega}^L, \mathbf{\Omega}^R), \tag{21}$$
$$+ w_a E_a^R(\mathbf{\Omega}^L, \mathbf{\Omega}^R)$$
$$+ w_d E_d(\mathbf{\Omega}^L, \mathbf{\Omega}^R)$$

which is a weighted sum of the previously defined energies, where weights $w_s$, $w_a$, and $w_d$ are positive scalars. The optimization problem is expressed as a system of linear equations $\mathbf{Ax} = \mathbf{b}$, where matrix $\mathbf{A} \in \mathfrak{R}^{2N \times 2N}$ is a sparse regular structured diagonal matrix representing the image grid defined above for the left and right view, respectively, and $N$ is the total number of pixels in $\mathbf{I}_{in}$, e.g. $N = 2048 \times 1024$ for 2K images. The solution vector $\mathbf{x}$ contains the stacked rows of the updated warping maps $\hat{\Omega}^L$ and $\hat{\Omega}^R$ and is obtained by a parallel CPU implementation of a numerical direct or iterative solver. In case of an iterative solver, the initial warp maps are used as starting point for the optimization process.

The warping algorithm presented so far, yields very good results for images of smaller size, e.g. $640 \times 480$ pixels. However, depending on the computational affordability and with increasing image size, the computation time as well as the memory consumption eventually render the algorithm almost unusable. Continuing, the next section will propose a new and efficient adaptation of the regular grid-based warping presented in this section, which yields visually almost identical results at a fraction of the computational cost and much lower memory consumption.

V. ADAPTIVE GRID-BASED APPROACH

The proposed algorithm is motivated by the observation that most depth maps $\mathbf{E}$ and their corresponding disparity maps $\mathbf{D}$ are very smooth for the most part and depth changes happen gradually. The only exceptions are found along depth discontinuities. Under the assumption that also the final solution, $\hat{\Omega}^L$ and $\hat{\Omega}^R$, will be comparably smooth in these regions, there is great potential to improve efficiency and reduce redundancy. Instead of representing each pixel as an individual variable in the optimization problem defined in Eq. (20), the idea is to combine pixels with similar disparity into larger regions of support and, thus, represent these pixels using less variables. This scheme allows for a high-resolution representation of image regions where necessary and low-resolution where possible.

In theory, in order to reduce the complexity, the original square system of linear equations $\mathbf{Ax} = \mathbf{b}$ with $n$ unknowns is transformed linearly into a problem of lower dimensionality. This is achieved by substituting the solution vector

$$\mathbf{x} = \mathbf{My} , \qquad\qquad (22)$$

so that the system of equations can now be rewritten to

$$\mathbf{AMy} = \mathbf{b} , \qquad\qquad (23)$$

where $\mathbf{y} \in \mathfrak{R}^m$ and $\mathbf{M} \in \mathfrak{R}^{n \times m}$ denote the reduced solution vector and the transformation matrix, respectively. By squaring the problem now becomes

$$\mathbf{M}^T \mathbf{A}^T \mathbf{AMy} = \mathbf{M}^T \mathbf{A}^T \mathbf{b} , \qquad\qquad (24)$$

which is an $m \times m$ rather than an $n \times n$ problem and, hence, reduces the complexity significantly for $m \ll n$. After solving the reduced problem, the solution is transformed back to the initial size using Eq. (22).

In practice, the matrix $\mathbf{M}$ that is used to reduce the complexity of the optimization problem does not have to be expressed explicitly. This is because the transformation that is encoded in $\mathbf{M}$ can be understood as a linear interpolation of the data. And this, in turn, can be approximated by a quadtree. Using bilinear (or cubic) interpolation, it is possible to reconstruct the values of entries enclosed by the four corners of a leaf node. The construction of this tree is explained in the next section.

A. Construction of the Adaptive Grid

This section will describe the construction of a quadtree structure for an input image $\mathbf{I}_{in}$. Each node of the tree is square of a power-of-two width and a minimum width of one pixel. Non-leaf nodes have four children, which subdivide the area of their parent into four squares of equal size. The four corners of the quad that are defined by a tree node are chosen to coincide with the centers of image pixels, i.e. two neighbouring nodes on the same level of a quadtree will share two corner points and, thus, share information about two physical pixels. This is important, as it preserves the notions of neighbourhood and interconnectedness, which is known from regular pixel grids.

In a first step of the construction of a quadtree $T$, its root node is chosen to be a square with the smallest power-of-two edge length large enough to cover the entire image region of $\mathbf{I}_{in}$. Choosing a power-of-two edge length ensures that the splitting of quads always yields integer-sized quads until the minimum edge length of one pixel has been reached. Then, after the root node has been centered over $\mathbf{I}_{in}$, all nodes in the set of leafs $L$ of $T$ (initially only its root node is in this set) are split until $L$ can be divided into two disjoint sets $L_{in}$ and $L_{out}$, such that $L_{in} \cup L_{out} = L$ and $L_{in} \cap L_{out} = \varnothing$.

The set $L_{in}$ is defined to contain all those leaf nodes of $T$ that are completely inside the area of image $I_{in}$ and set $L_{out}$ is defined to contain all those completely outside of that area. For ease of notation and since $L_{out}$ will be ignored for the rest of the construction of the quadtree, $L$ will be used to refer to $L_{in}$ in the remainder of this specification.

Given the set of leaf nodes $L$, the main construction phase of the quadtree is as follows. Except at depth discontinuities, the values in most disparity maps change gradually and are locally rather homogeneous. Inspired by this observation each leaf node $n \in L$ is split, if

1) $n$ contains one or more pixels marked as depth discontinuities in **G**

2) $n$ contains one or more pixels marked as hole in $\mathbf{H}^L$ or $\mathbf{H}^R$

3) the difference between the minimum and maximum disparity inside $n$ is above a threshold $d_{max}$.

4) the edge length of $n$ is above the maximum edge length $l_{max}$.

This process is repeated for all leafs until either none of the rules above is violated any longer or until the edge length of a quad has reached one pixel. Finally, in order to ensure a gradual change of resolution, the tree is balanced, which means that no two neighbouring nodes that share a common edge will differ in tree depth by more than one level. A schematic example for a quadtree is given in Fig. 7. Here, the tree represents each pixel around holes (dark pixels) with the highest resolution. Neighbouring leaf quads, which are on different depth levels in the tree, create so-called T-junctions (dark dots within a stippled square). These junctions need special attention, which will be explained later. An example for a resulting quadtree of a real image is shown in Fig. 6b.

B. Energy Terms

The general purpose of the energy terms, as they were introduced in section IV, remains identical in the adaptive approach with the exception that now only a subset of pixels is used for the minimization process.

From the set of leaf nodes $L$ of a quadtree $T$ a directed graph $G = (V,E,Q)$ is derived, where $V$ denotes the set of corners of the leaf nodes of $T$, and $E$ is the set of edges connecting the corners of the quadtree leaf nodes. Finally, $Q$ denotes the set of leaf quads of $T$. Let $M = |V|$ be the number of corners and $V_i$ be the $i$-th corner in $V$.

Then, defining the energy terms only for the points stored in $V$, the disparity preserving energy term in Eq. (14) can now updated to

$$E_d(\mathbf{\Omega}^L, \mathbf{\Omega}^R) = \sum_{i=1}^{M} \left\| (\mathbf{\Omega}^R_{v_i} - \mathbf{\Omega}^L_{v_i}) - \mathbf{D}_{v_i} \right\|^2 , \qquad (25)$$

the similarity preserving energy term in Eq. (15) becomes

$$E_s^V(\mathbf{\Omega}^L, \mathbf{\Omega}^R) = \sum_{i=1}^{M} \mathbf{S}_{v_i} \left\| \mathbf{\Omega}^V_{v_i} - \tilde{\mathbf{\Omega}}^V_{v_i} \right\|^2 , \qquad (26)$$

and the smoothness term in Eq. (18) is now

$$E_a^V(\mathbf{\Omega}^L, \mathbf{\Omega}^R) = \sum_{i=1}^{M} \mathbf{S}_{v_i} \sum_{\forall j:(i,j) \in \varepsilon} \delta_{ij} \left\| (\mathbf{\Omega}^V_{v_i} - \mathbf{\Omega}^V_{v_j}) - (\tilde{\mathbf{\Omega}}^V_{v_i} - \tilde{\mathbf{\Omega}}^V_{v_j}) \right\|^2 , \qquad (27)$$

where, as before, the superscript $V \in \{L,R\}$ indicates the energy terms for the left and the right view, respectively.

C. T-junction constraints

In a planar regular grid, every vertex is guaranteed to have exactly four neighbouring vertices. The same cannot be assumed if the grid is derived from a quadtree. A special case arises for two neighbouring nodes on the same depth level, of which one is a leaf and the other is not, that share a common edge between two points $a$ and $b$. Since, by definition, the quadtree is balanced, the children of the neighbouring node have to be leafs and share a common point $t$ half way on the edge between $a$ and $b$, forming a T-junction. This case is depicted as dark dots within a stippled square in Fig. 7.

Concerning the optimization problem to find a pair of hole-free warping maps, this configuration is problematic, since $t$ could be shifted such that it will no longer be on the edge between points $a$ and $b$. As a result the texture would tear, which results in new holes in the final image.

This can be prevented, however, by adding boundary constraints to the optimization problem which force point $t$ on the T-junction always to stay on the edge connecting points $a$ and $b$. This can be expressed as

$$\Omega^V_{V_t} = \alpha\Omega^V_{V_a} + (1-\alpha)\Omega^V_{V_b}, \qquad (28)$$

where

$$\alpha = \frac{\|b-a\|}{\|b-t\|}, \qquad (29)$$

is an interpolation weight and the superscript $V \in \{L,R\}$ denotes the left and right view.

D. Error Minimization

The optimization problem in Eq. (13) can now be updated to

$$\operatorname*{argmin}_{\hat{\Omega}^L,\hat{\Omega}^R} E(\Omega^L,\Omega^R), \qquad (30)$$

subject to     hole-filling constraints (13)
                     T-junction constraints (28)

where the energy is defined as the weighted sum of energy terms in Eq. (21) but now using the updated energies in Eq. (25)-(27).

This problem is minimized identically to the regular grid-based approach, only that now a $M \times M$ instead of an $2N \times 2N$ problem has to be solved. Since $M << 2N$, solving the reduced optimization problem is far more efficient.

The solution vector is then mapped to the final warping maps $\hat{\Omega}^L$ and $\hat{\Omega}^R$ using bilinear (or cubic) interpolation to fill the values of the regions inside the quadtree nodes. Finally, the rendering algorithm from section III-A generates the stereo frame using the new warping maps. The entire algorithm is depicted schematically in Fig. 4b.

An example for the output of the adaptive warping algorithm is depicted in Fig. 8. Gray values in the warping maps shown on the left side indicate negative shift values, gray values in the warping maps shown on the right side indicate positive shift values. The top row depicts the initial warp maps that were produced by the DIBR-algorithm for the images shown in Fig. 3. The bottom row depicts the updated warp maps that are produced by the warping algorithm. The updated warp maps are similar to the initial warp maps except at region that would create holes.

VI. RESULTS

This section evaluates the performance of the proposed adaptive grid based algorithm and compares it against the regular grid based algorithm in terms of visual quality and computational complexity.

A series of visual results is provided in Fig. 9. A column represents several visualizations of one example. The first and second row depict the input images and the corresponding depth maps. The quadtree representation that is used to warp the image, as described in the previous section, is given in the third row. Rows four and five depict the anaglyph output of the DIBR without and with warping, respectively. Please note, that for optimal viewing experience it is suggested to watch these images zoomed in.

The parameters used for warping are given in Table I. The values for the smoothness weight $w_s$ are chosen to be larger than the disparity weight $w_d$ and the similarity weight $w_a$ to balance the different value ranges of the smoothness energy and the other energies. The depth budget has been chosen such that it produces a good stereo experience on a computer display.

TABLE I

IMAGE SIZE AND WARPING SETTINGS USED FOR TASTING. EXAMPLES OF THESE DATA SETS ARE DEPICTED IN FIG. 9.

| data set | image size | shift ($d_n$, $d_t$) | weights ($w_s$, $w_a$, $w_d$) |
|---|---|---|---|
| soccer | 1280 × 720 | (-20, 20) | (1000, 1, 1) |
| breakdancer | 1280 × 720 | (-20, 20) | (1000, 1, 1) |
| seal | 1920 × 1080 | (-10, 10) | (1000, 0.25, 0.25) |
| mountains | 1920 × 1080 | (-10, 10) | (1000, 0.25, 0.25) |

Please note that for the comparisons in the following sections between the regular grid-based approach and the proposed approach, the image size of all test data mentioned in Table I was downsized to a width of 640 pixels and the values of the near and far shifts were scaled accordingly. This restriction is necessary because the regular grid-based approach either depletes the available computer memory, if a direct solver is used, or run-time becomes infeasible long before an iterative solver converges. All tests were conducted using a CPU-implementation running on standard hardware with single quad-core processors.

A. Complexity Reduction

The quadtree structure used to reduce the complexity of the optimization problem described in section V is region-based. The number of regions in a quadtree is $O(p)$, where $p$ denotes the perimeter around the binary regions in the image that is used for the construction of the tree. In our case, $p$ depends on the hole masks and depth discontinuities as well as the disparity map that is used according to the construction rules described in section V-A. The number of additional quads that are necessary to balance the tree is constant.

The actual complexity of the reduced optimization problem in the adaptive method depends directly on the depth structure of the scene. In the simplest case, all elements of depth map $E$ will have an identical value. Here, the number of regions of the quadtree depends only on the size of the image. That is, because the quads have an edge length of $2^n$, where $n$ is a non-negative integer, while the dimension of the image is unrestricted. On the other hand, a worst case can be created by alternately assigning the smallest and the largest depth value to the elements in $E$. Now, the quadtree will not be able to reduce the complexity at all. In fact, the overall complexity will even be increased due to the overhead introduced by the quadtree. In practice, however, these extreme cases are almost non-existent and, from experience, can be neglected.

The amount of reduction that was achieved with the adaptive approach is expressed as the ratio of the number of unknowns in the linear equation system $AMy = b$ to the number of unknowns in $Ax = b$ in the regular approach. For the test data that was used during development, an average reduction to less than one quarter of the original number of unknowns was achieved. Fig. 10 shows a 100 bin histogram of the variable reduction across all the frames from the video dataset.

B. Timing and Memory

The complexity reduction of the optimization problem has a direct impact on the performance of the algorithm. As noted before, this test is restricted to images of width of 640 pixels. For larger images, the ratio of used memory between the two algorithms is likely to be even more in favour of the adaptive approach.

A summary of the results is depicted in Fig. 11. The measured values of the regular approach are given on the horizontal axis and the values of the adaptive method are given on the vertical axis. Measurement points below the diagonal indicate better behaviour of the adaptive approach and the distance to the diagonal illustrates the extent to which the adaptive approach is more efficient than the regular grid-based method. In Fig. 11a, the maximal memory usage is compared, which suggests that the adaptive approach requires only about a quarter of the memory that is used by the regular approach. Similarly, a comparison of the run-time in Fig. 11b suggests a decrease to one third of the time for the adaptive vs. the regular approach.

C. *Visual quality*

While the previous sections have demonstrated the complexity reduction of the adaptive approach with respect to the regular approach, this section evaluates the impact of the optimization on the visual quality. In general, multimedia quality can be evaluated either through subjective quality tests or based on objective quality metrics which try to predict the perceived quality. Due to the limited number of videos and the lack of a reference for the synthesized view a subjective quality test would have been not very meaningful. Therefore, the quality difference between the two approaches was assessed using objective quality metrics. Most of the proposed 3D quality metrics apply well-known 2D quality metrics to the individual views and depth map of the 3D content and combine the results according to some heuristic rules (Q. Huynh-Thu et al., "Video quality assessment: From 2d to 3d-challenges and future trends", in Proceedings of IEEE International Conference on Image Processing, Hong Kong, 2010). Since both approaches modify the warping maps in order to prevent holes, the most suitable way for the evaluation is to compare the final results after the view synthesis. The structural similarity index (SSIM) (Z. Wang et al., "Image quality assessment: From error visibility to structural similarity", in IEEE Transactions on Image Processing, Vol. 13, No. 4, 2004) is adopted to compare the synthesized view from the adaptive approach with the one from the regular approach since it has been shown to provide a good correlation with the perceived quality (P. Hanhart and T. Ebrahimi, "Quality assessment of a stereo pair formed from decoded and synthesized views using objective metrics", in Proceedings of 3DTV Conference: The True Vision - Capture, Transmission and Display of 3D Video, Zurich, Switzerland, 2012).

Fig. 12 depicts a 100 bin histogram of the SSIM scores across the whole dataset. The values range from 0.891 to 0.987 with an average score of 0.943 which means that the result of the adaptive approach is structurally very similar to the regular approach. Combined with the second view for 3D restitution the deviations are even less noticeable due to a perceptual effect called binocular suppression.

D. Limitations

The adaptive warping algorithm proposed in this specification is an approximation of a regular grid-based approach and, as such, is subject to the same constraints and limitations. If scenes contain too many salient regions or if salient regions are too close to each other, warping may introduce disturbing artefacts.

As described, our algorithm does not fill holes in the final render output but instead changes the warping maps, such that no holes occur in the first place, i.e. holes are avoided rather than filled. As a result, the algorithm depends heavily on the quality of the hole masks, which indicate where in the image holes will occur, and can only prevent holes in the final render output, if they are marked correctly.

There exist several problems, which can be considered unsolved and are mutually shared among current state-of-the-art image warping algorithms. For example, warping of translucent object, such vases or windows, may lead to visually unexpected behaviour of the image scene which is in violation with the viewing experience of viewers. Similar effects can be expected from reflections on surfaces or objects with fuzzy borders, such as hair or objects outside the depth-of-field. Other unsolved problems arise from film grain or small particles like snow or rain. But again, these are general problems that apply to all planar image warping algorithms.

VII. CONCLUSION

In this specification we have described the problem of holes that occur in the process of depth image-based rendering, due to the lack knowledge about the 3D structure of a scene. We proposed an image warping algorithm based on the work of O. Wang et al. (see above) that represents an image as a regular grid and alters a pair of warping maps such that the final render output will be hole-free. We also proposed a new algorithm based on an adaptive grid-structure, which facilitates an approximation of the first algorithm and increases the efficiency significantly. Finally, we have conducted a series of experiments in which it was shown that the proposed adaptive algorithm produces visually very similar results at a fraction of the computational cost that is required by the regular grid-based approach.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

While in the above-described embodiments, the warping data comprises at least one warping map that is calculated from a depth map as described with reference to Eq. (2) and (3), the term "warping data" as used in the claims can also comprise at least one depth map and the relations that map the depth values comprised by the at least one depth map into warping values (such as Eq. (2) and (3)). The alteration of the warping data may then comprise altering depth values comprised by the at least one depth map.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

**Claims**

1. Method usable in synthesizing a stereoscopic image comprising a left view ($\mathbf{I}_{out}^{L}$) and a right view ($\mathbf{I}_{out}^{R}$) from a monoscopic image ($\mathbf{I}_{in}$) depicting a scene and a depth map ($\mathbf{E}$) comprising depth values associated to pixels of the monoscopic image ($\mathbf{I}_{in}$), wherein the method comprises:

   - providing warping data ($\tilde{\Omega}^{L}$ ; $\tilde{\Omega}^{R}$) corresponding to the depth map ($\mathbf{E}$) and comprising warping values associated to pixels of the monoscopic image ($\mathbf{I}_{in}$), wherein the warping data ($\tilde{\Omega}^{L}$; $\Omega^{R}$) indicates how the monoscopic image ($\mathbf{I}_{in}$) is to be warped to synthesize at least one of the left view ($\mathbf{I}_{out}^{L}$) and the right view ($\mathbf{I}_{out}^{R}$),

   - detecting hole pixels comprising neighbouring pixels of the monoscopic image ($\mathbf{I}_{in}$) which, if warped according to the warping data ($\tilde{\Omega}^{L}$ ; $\tilde{\Omega}^{R}$), will result in a hole in the at least one of the left view ($\mathbf{I}_{out}^{L}$) and the right view ($\mathbf{I}_{out}^{R}$),

   - computing from the warping data ($\tilde{\Omega}^{L}$ ; $\tilde{\Omega}^{R}$) altered warping data ($\hat{\Omega}^{L}$; $\Omega^{R}$) comprising altered warping values such that if the monoscopic image ($\mathbf{I}_{in}$) is warped according to the altered warping data ($\hat{\Omega}^{L}$ ; $\hat{\Omega}^{R}$) to synthesize at least one of the left view $\left(\mathcal{I}_{out}^{L}\right)$ and the right view $\left(\mathcal{I}_{out}^{R}\right),$ no holes will result in the at least one of the left view ($\mathbf{I}_{out}^{L}$) and the right view ($\mathbf{I}_{out}^{R}$),

   wherein the computing comprises setting-up and optimizing an energy function that is based on warping values comprised by the warping data ($\tilde{\Omega}^{L}$ : $\tilde{\Omega}^{R}$),
   **characterized in that** the energy function comprises at least one of the following energy terms:

   - a similarity preserving energy term that penalizes for a pixel of the monoscopic image ($\mathbf{I}_{in}$) a difference between the altered warping value associated to the pixel and the warping value associated to the pixel, and
   - a smoothness preserving energy term that penalizes for neighbouring pixels of the monoscopic image ($\mathbf{I}_{in}$) which, if warped according to the warping data ($\tilde{\Omega}^{L}$ ; $\tilde{\Omega}^{R}$), will not result in an overlap in the at least one of the left view ($\mathbf{I}_{out}$) and the right view ($\mathbf{I}_{out}^{R}$), a difference between (i) a first difference between the altered warping values associated to the neighbouring pixels and (ii) a second difference between the warping values associated to the neighbouring pixels.

2. The method according to claim 1, wherein detecting the hole pixels comprises comparing a difference between the warping values associated to the neighbouring pixels to a predetermined threshold.

3. The method according to claim 1 or 2, wherein the optimization of the energy function is subject to a hole-filling constraint that fixes the altered warping values associated to the hole pixels, wherein the fixing comprises:

   - selecting from the detected hole pixels a set of adjoined hole pixels,
   - determining from the set of adjoined hole pixels a first border pixel bordering the set of hole pixels on a first side and a second border pixel bordering the set of hole pixels on a second side, and
   - fixing the altered warping values associated to the set of adjoined hole pixels to be (i) equal to the warping value associated to the first border pixel, if the depth value associated to the first border pixel indicates a smaller scene depth than the depth value associated to the second border pixel, and (ii) equal to the warping value associated to the second border pixel, if the depth value associated to the second border pixel indicates a smaller scene depth than the depth value associated to the first border pixel.

4. The method according to claim 1, wherein the similarity preserving energy term and/or the smoothness preserving energy term comprises a saliency weighting that penalizes for pixels of the monoscopic image ($\mathbf{I}_{in}$) an alteration of the warping values associated to some pixels more than an alteration of the warping values associated to other pixels of the monoscopic image ($\mathbf{I}_{in}$).

5. The method according to any of claims 1 to 4, wherein the warping data ($\tilde{\Omega}^{L}$ ; $\tilde{\Omega}^{R}$) comprises left view warping data ($\tilde{\Omega}^{L}$) comprising left view warping values for synthesizing the left view ($\mathbf{I}_{out}^{L}$) and right view warping data ($\tilde{\Omega}^{R}$)

comprising right view warping values for synthesizing the right view ($I_{out}^{R}$), wherein the method comprises providing disparity data (**D**) corresponding to the depth map (**E**) and comprising disparity values associated to pixels of the monoscopic image ($I_{in}$), wherein the computing comprises computing from the left view warping data ($\tilde{\Omega}^{L}$) altered left view warping data ($\hat{\Omega}^{L}$) comprising altered left view warping values and from the right view warping data ($\tilde{\Omega}^{R}$) altered right view warping data ($\hat{\Omega}^{R}$) comprising altered right view warping values, and wherein the energy function comprises a disparity preserving energy term that penalizes for a pixel of the monoscopic image ($I_{in}$) a difference between (i) a difference between the altered right view warping value associated to the pixel and the altered left view warping value associated to the pixel and (ii) the disparity value associated to the pixel.

6. The method according to one of claims 1 to 5, wherein the energy function is optimized by solving a system of linear equations.

7. The method according to one of claims 1 to 6, wherein the energy function depends on only a subset of the warping values comprised by the warping data ($\tilde{\Omega}^{L}$ ; $\tilde{\Omega}^{R}$).

8. The method according to claim 7, wherein the subset of the warping values is determined by constructing a tree structure for the monoscopic image ($I_{in}$), wherein the tree structure comprises leaf nodes at different levels of tree depth, wherein each leaf node comprises corners at pixels of the monoscopic image ($I_{in}$) and contains pixels of the monoscopic image ($I_{in}$), and wherein the subset of the warping values corresponds to the warping values associated to corner pixels, which are the pixels that correspond to the corners of the leaf nodes.

9. The method according to claim 8, wherein the method comprises providing disparity data (**D**) corresponding to the depth map (**E**) and comprising disparity values associated to pixels of the monoscopic image ($I_{in}$), and wherein constructing the tree structure comprises splitting a leaf node if at least one of the following criteria is fulfilled:

   - the difference between a minimum value of the depth values associated to neighbouring pixels of the one or more pixels contained by the leaf node and a maximum value of the depth values associated to the neighbouring pixels of the one or more pixels contained by the leaf node is above a predetermined threshold,
   - the one or more pixels contained by the leaf node comprise one or more hole pixels,
   - a difference between a minimum value of the disparity values associated to the one or more pixels contained by the leaf node and a maximum value of the disparity values associated to the one or more pixels contained by the leaf node is above a predetermined threshold, or
   - an edge length of the leaf node is above a predetermined maximum edge length.

10. The method according to claim 8 or 9, wherein constructing the tree structure comprises balancing the tree structure such that no leaf nodes that share a common edge will differ in tree depth by more than one level.

11. The method according to one of claims 8 to 10, wherein, if the tree structure comprises a T-junction resulting from neighbouring leaf nodes at different levels of tree depth, the optimization of the energy function is subject to a T-junction constraint that ensures that the altered warping value associated to a corner pixel at the T-junction corresponds to a linear interpolation of the altered warping values associated to the two corner pixels neighbouring the T-junction corner pixel at opposite sides of the T-junction.

12. The method according to one of claims 8 to 11, wherein the altered warping values associated to the one or more pixels contained by a leaf node are bilinearly (or cubic) interpolated from the altered warping values associated to the corner pixels of the leaf node.

13. Apparatus usable in synthesizing a stereoscopic image comprising a left view ($I_{out}^{L}$) and a right view ($I_{out}^{R}$) from a monoscopic image ($I_{in}$) depicting a scene and a depth map (**E**) comprising depth values associated to pixels of the monoscopic image ($I_{in}$), wherein the apparatus comprises:

   - a providing unit for providing warping data ($\tilde{\Omega}^{L}$ ; $\tilde{\Omega}^{R}$) corresponding to the depth map (**E**) and comprising warping values associated to pixels of the monoscopic image ($I_{in}$), wherein the warping data ($\tilde{\Omega}^{L}$ ; $\tilde{\Omega}^{R}$) indicates how the monoscopic image ($I_{in}$) is to be warped to synthesize at least one of the left view ($I_{out}^{L}$) and the right

view ($I^R_{out}$),

- a detecting unit for detecting hole pixels comprising neighbouring pixels of the monoscopic image ($I_{in}$) which, if warped according to the warping data ($\tilde{\Omega}^L; \tilde{\Omega}^R$), will result in a hole in the at least one of the left view ($I^L_{out}$) and the right view ($I^R_{out}$),

- a computing unit for computing from the warping data ($\tilde{\Omega}^L; \tilde{\Omega}^R$) altered warping data ($\hat{\Omega}^L; \hat{\Omega}^R$) comprising altered warping values such that if the monoscopic image ($I_{in}$) is warped according to the altered warping data ($\hat{\Omega}^L; \hat{\Omega}^R$) to synthesize at least one of the left view $\left( I^L_{out} \right)$ and the right view $\left( I^R_{out} \right)$, no holes will result in the at least one of the left view ($I^L_{out}$) and the right view ($I^R_{out}$),

wherein the computing comprises setting-up and optimizing an energy function that is based on warping values comprised by the warping data ($\tilde{\Omega}^L; \tilde{\Omega}^R$),

**characterized in that** the energy function comprises at least one of the following energy terms:

- a similarity preserving energy term that penalizes for a pixel of the monoscopic image ($I_{in}$) a difference between the altered warping value associated to the pixel and the warping value associated to the pixel, and
- a smoothness preserving energy term that penalizes for neighbouring pixels of the monoscopic image ($I_{in}$) which, if warped according to the warping data ($\tilde{\Omega}^L; \tilde{\Omega}^R$), will not result in an overlap in the at least one of the left view ($I^L_{out}$) and the right view ($I^R_{out}$), a difference between (i) a first difference between the altered warping values associated to the neighbouring pixels and (ii) a second difference between the warping values associated to the neighbouring pixels.

14. Computer program comprising program code for performing the steps according to the method defined in any of claims 1 to 12, when the computer program is executed by a computer.

**Patentansprüche**

1. Verfahren, verwendbar beim Synthetisieren eines stereoskopischen Bildes, das eine linke Ansicht ($I^L_{out}$) und eine rechte Ansicht ($I^R_{out}$) umfasst, aus einem monoskopischen Bild ($I_{in}$), das eine Szene zeigt, und einer Tiefenkarte (**E**), die Tiefenwerte umfasst, die mit Pixeln des monoskopischen Bildes ($I_{in}$) assoziiert sind, wobei das Verfahren umfasst:

- Bereitstellen von Warpingdaten ($\tilde{\Omega}^L; \tilde{\Omega}^R$), die zu der Tiefenkarte (**E**) korrespondieren und Warpingwerte umfassen, die mit Pixeln des monoskopischen Bildes ($I_{in}$) assoziiert sind, wobei die Warpingdaten ($\tilde{\Omega}^L; \tilde{\Omega}^R$) angeben, wie das monoskopische Bild ($I_{in}$) zu warpen ist, und zumindest eine der linken Ansicht ($I^L_{out}$) und der rechten Ansicht ($I^R_{out}$) zu synthetisieren,
- Erkennen von Lochpixeln, die benachbarte Pixel des monoskopischen Bildes ($I_{in}$) umfassen, die, falls sie gemäß den Warpingdaten ($\tilde{\Omega}^L; \tilde{\Omega}^R$) gewarpt werden, zu einem Loch in der zumindest einen der linken Ansicht ($I^L_{out}$) und der rechten Ansicht ($I^R_{out}$) führen,

- Berechnen, aus den Warpingdaten ($\tilde{\Omega}^L; \tilde{\Omega}^R$), von modifizierten Warpingdaten ($\tilde{\Omega}^L; \tilde{\Omega}^R$), die modifizierte Warpingwerte umfassen, derart, dass, falls das monoskopische Bild ($I_{in}$) gemäß den modifizierten Warpingdaten ($\tilde{\Omega}^L; \hat{\Omega}^R$) gewarpt wird, um zumindest eine der linken Ansicht ($I^L_{out}$) und der rechten Ansicht ($I^R_{out}$) zu synthetisieren, keine Löcher in der zumindest einen der linken Ansicht ($I^L_{out}$) und der rechten Ansicht ($I^R_{out}$) resultieren,

wobei das Berechnen ein Aufstellen und Optimieren einer Energiefunktion umfasst, die auf Warpingwerten basiert, die von den Warpingdaten ($\tilde{\Omega}^L$ ; $\tilde{\Omega}^R$) umfasst sind,

**dadurch gekennzeichnet, dass** die Energiefunktion zumindest einen der folgenden Energieterme umfasst:

- einen Ähnlichkeitserhaltungsenergieterm, der für einen Pixel des monoskopischen Bildes ($I_{in}$) eine Differenz zwischen dem modifizierten Warpingwert, der mit dem Pixel assoziiert ist, und dem Warpingwert, der mit dem Pixel assoziiert ist, bestraft, und
- einen Glattheitserhaltungsenergieterm, der für benachbarte Pixel des monoskopischen Bildes ($I_{in}$), die, falls sie gemäß den Warpingdaten ($\tilde{\Omega}^L$ ; $\tilde{\Omega}^R$) gewarpt werden, nicht einer Überlappung in der zumindest einen der linken Ansicht ($I_{out}^L$) und der rechten Ansicht ($I_{out}^R$) resultieren, eine Differenz zwischen (i) einer ersten Differenz zwischen den modifizierten Warpingwerten, die mit den benachbarten Pixeln assoziiert sind, und (ii) einer zweiten Differenz zwischen den Warpingwerten, die mit dem benachbarten Pixeln assoziiert sind, bestraft.

2. Verfahren nach Anspruch 1, wobei das Detektieren der Lochpixel ein Vergleichen einer Differenz zwischen den Warpingwerten, die mit den benachbarten Pixeln assoziiert sind, und eines vorbestimmten Schwellwerts umfasst.

3. Verfahren nach Anspruch 1 oder 2, wobei das Optimieren der Energiefunktion in Abhängigkeit von einer Lochfüllrandbedingung erfolgt, die die modifizierten Warpingwerte, die mit den Lochpixeln assoziiert sind, festlegt, wobei das Festlegen umfasst:

- Auswählen, aus den detektierten Lochpixeln, einer Menge von aneinander angrenzenden Lochpixeln,
- Bestimmen, aus der Menge von aneinander angrenzenden Lochpixeln, eines ersten Randpixels, der die Menge von Lochpixeln an einer ersten Seite begrenzt, und eines zweiten Lochpixels, der die Menge von Lochpixeln an einer zweiten Seite begrenzt, und
- Festlegen der modifizierten Warpingwerte, die mit der Menge von aneinander angrenzenden Lochpixeln assoziiert sind, derart, dass sie (i) gleich dem Warpingwert sind, der mit dem ersten Randpixel assoziiert ist, falls der Tiefenwert, der mit dem ersten Randpixel assoziiert ist, eine geringere Szenentiefe angibt als der Tiefenwert, der mit dem zweiten Randpixel assoziiert ist, und (ii) gleich dem Warpingwert sind, der mit dem zweiten Randpixel assoziiert ist, falls der Tiefenwert, der mit dem zweiten Randpixel assoziiert ist, eine geringere Szenentiefe angibt als der Tiefenwert, der mit dem ersten Randpixel assoziiert ist.

4. Verfahren nach Anspruch 1, wobei der Ähnlichkeitserhaltungsenergieterm und/oder der Glattheitserhaltungsenergieterm eine Herausragegewichtung umfasst, die für Pixel des monoskopischen Bildes ($I_{in}$) eine Modifizierung der Warpingwerte, die mit einigen Pixeln assoziiert sind, mehr bestraft als eine Modifizierung der Warpingwerte, die mit anderen Pixeln des monoskopischen Bildes ($I_{in}$) assoziiert sind.

5. Verfahren nach einem der Ansprüche 1 bis 4, wobei die Warpingdaten (($\tilde{\Omega}^L$ ; $\tilde{\Omega}^R$) Warpingdaten für die linke Ansicht ($\tilde{\Omega}^L$) umfassen, die Warpingwerte für die linke Ansicht zum Synthetisieren der linken Ansicht ($I_{out}^L$) umfassen, und Warpingdaten für die rechte Ansicht ($\tilde{\Omega}^R$), die Warpingwerte für die rechte Ansicht zum Synthetisieren der rechten Ansicht ($I_{out}^R$) umfassen, wobei das Verfahren ein Bereitstellen von Disparitätsdaten (**D**) umfasst, die zu der Tiefenkarte (**E**) korrespondieren und Disparitätswerte umfassen, die mit Pixeln des monoskopischen Bildes ($I_{in}$) assoziiert sind, wobei das Berechnen ein Berechnen, aus den Warpingdaten für die linke Ansicht ($\tilde{\Omega}^L$), von modifizierten Warpingdaten für die linke Ansicht ($\hat{\Omega}^L$), die modifizierte Warpingwerte für die linke Ansicht umfassen, und, aus den Warpingdaten für die rechte Ansicht ($\tilde{\Omega}^R$), von modifizierten Warpingdaten für die rechte Ansicht ($\hat{\Omega}^R$), die modifizierte Warpingwerte für die rechte Ansicht umfassen, umfasst, und wobei die Energiefunktion einen Disparitätserhaltungsenergieterm umfasst, der für einen Pixel des monoskopischen Bildes ($I_{in}$) eine Differenz zwischen (i) einer Differenz zwischen dem modifizierten Warpingwert für die rechte Ansicht, der mit dem Pixel assoziiert ist, und dem modifizierten Warpingwert für die linke Ansicht, der mit dem Pixel assoziiert ist, und (ii) dem Disparitätswert, der mit dem Pixel assoziiert ist, bestraft.

6. Verfahren nach einem der Ansprüche 1 bis 5, wobei die Energiefunktion durch Lösen eines Systems von linearen Gleichungen optimiert wird.

7. Verfahren nach einem der Ansprüche 1 bis 6, wobei die Energiefunktion nur von einer Untermenge der Warpingwerte abhängt, die von den Warpingdaten ($\tilde{\Omega}^L$ ; $\tilde{\Omega}^R$) umfasst sind.

**8.** Verfahren nach Anspruch 7, wobei die Untermenge der Warpingdaten bestimmt wird, indem eine Baumstruktur für das monoskopische Bild ($I_{in}$) konstruiert wird, wobei die Baumstruktur Blattknoten an unterschiedlichen Leveln der Baumtiefe umfasst, wobei jeder Blattknoten Ecken an Pixeln des monoskopischen Bildes ($I_{in}$) umfasst und Pixel des monoskopischen Bilds ($I_{in}$) beinhaltet, und wobei die Untermenge der Warpingwerte zu den Warpingwerten korrespondiert, die mit Eckpixeln, die die Pixel sind, die zu den Ecken der Blattknoten korrespondieren, assoziiert sind.

**9.** Verfahren nach Anspruch 8, wobei das Verfahren ein Bereitstellen von Disparitätsdaten (**D**) umfasst, die zu der Tiefenkarte (**E**) korrespondieren und Disparitätswerte umfassen, die mit Pixeln des monoskopischen Bildes ($I_{in}$) assoziiert sind, und wobei das Konstruieren der Baumstruktur ein Aufsplitten eines Blattknotens umfasst, wenn zumindest eines der folgenden Kriterien erfüllt ist:

- die Differenz zwischen einem Minimumwert der Tiefenwerte, die mit benachbarten Pixeln der ein oder mehreren Pixel, die von dem Blattknoten beinhaltet sind, assoziiert sind, und einem Maximumwert der Tiefenwerte, die mit den benachbarten Pixeln der ein oder mehreren Pixel, die von dem Blattknoten beinhaltet sind, assoziiert sind, liegt über einem vorbestimmten Schwellwert,
- die ein oder mehreren Pixel, die von dem Blattknoten beinhaltet sind, umfassen ein oder mehrere Lochpixel,
- eine Differenz zwischen einem Minimumwert der Disparitätswerte, die mit den ein oder mehreren Pixeln, die von dem Blattknoten beinhaltet sind, assoziiert sind, und einem Maximumwert der Disparitätswerte, die mit den ein oder mehreren Pixeln, die von dem Blattknoten beinhaltet sind, assoziiert sind, liegt über einem vorbestimmten Schwellwert, oder
- eine Kantenlänge des Blattknotens liegt über einer vorbestimmten maximalen Kantenlänge.

**10.** Verfahren nach Anspruch 8 oder 9, wobei das Konstruieren der Baumstruktur ein Ausbalancieren der Baumstruktur umfasst, derart, dass keine Blattknoten, die sich eine gemeinsame Kante teilen, sich in der Baumtiefe um mehr als ein Level unterscheiden.

**11.** Verfahren nach einem der Ansprüche 8 bis 10, wobei, falls die Baumstruktur eine T-Verzweigungsstelle umfasst, die aus benachbarten Blattknoten an unterschiedlichen Leveln der Baumtiefe resultiert, die Optimierung der Energiefunktion in Abhängigkeit von einer T-Verzweigungsstellenrandbedingung erfolgt, die sicherstellt, dass der modifizierte Warpingwert, der mit einem Eckpixel an der T-Verzweigungsstelle assoziiert ist, zu einer linearen Interpolation der modifizierten Warpingwerte, die mit den zwei Eckpixeln, die zu dem T-Verzweigungsstelleneckpixel an gegenüberliegenden Seiten der T-Verzweigungsstelle benachbart sind, korrespondiert.

**12.** Verfahren nach einem der Ansprüche 8 bis 11, wobei die modifizierten Warpingwerte, die mit den ein oder mehreren Pixeln, die von einem Blattknoten beinhaltet sind, assoziiert sind, bilinear (oder kubisch) aus den modifizierten Warpingwerten, die mit den Eckpixeln des Blattknotens assoziiert sind, interpoliert werden.

**13.** Vorrichtung, verwendbar beim Synthetisieren eines stereoskopischen Bildes, das eine linke Ansicht ($I_{out}^{L}$) und eine rechte Ansicht ($I_{out}^{R}$) umfasst, aus einem monoskopischen Bild ($I_{in}$), das eine Szene zeigt, und einer Tiefenkarte (**E**), die Tiefenwerte umfasst, die mit Pixeln des monoskopischen Bildes ($I_{in}$) assoziiert sind, wobei die Vorrichtung umfasst:

- eine Bereitstellungseinheit zum Bereitstellen von Warpingdaten ($\tilde{\Omega}^{L}$; $\tilde{\Omega}^{R}$), die zu der Tiefenkarte (**E**) korrespondieren und Warpingwerte umfassen, die mit Pixeln des monoskopischen Bildes ($I_{in}$) assoziiert sind, wobei die Warpingdaten ($\tilde{\Omega}^{L}$; $\tilde{\Omega}^{R}$) angeben, wie das monoskopische Bild ($I_{in}$) zu warpen ist, und zumindest eine der linken Ansicht ($I_{out}^{L}$) und der rechten Ansicht ($I_{out}^{R}$) zu synthetisieren,
- eine Erkennungseinheit zum Erkennen von Lochpixeln, die benachbarte Pixel des monoskopischen Bildes ($I_{in}$) umfassen, die, falls sie gemäß den Warpingdaten ($\tilde{\Omega}^{L}$; $\tilde{\Omega}^{R}$) gewarpt werden, zu einem Loch in der zumindest einen der linken Ansicht ($I_{out}^{L}$) und der rechten Ansicht ($I_{out}^{R}$) führen,
- eine Berechnungseinheit zum Berechnen, aus den Warpingdaten ($\tilde{\Omega}^{L}$; $\tilde{\Omega}^{R}$), von modifizierten Warpingdaten ($\hat{\Omega}^{L}$; $\hat{\Omega}^{R}$), die modifizierte Warpingwerte umfassen, derart, dass, falls das monoskopische Bild ($I_{in}$) gemäß den modifizierten Warpingdaten ($\hat{\Omega}^{L}$; $\hat{\Omega}^{R}$) gewarpt wird, um zumindest eine der linken Ansicht ($I_{out}^{L}$) und der rechten

Ansicht $\left(I^R_{out}\right)$ zu synthetisieren, keine Löcher in der zumindest einen der linken Ansicht $\left(I^L_{out}\right)$ und der rechten Ansicht $\left(I^R_{out}\right)$ resultieren,

wobei das Berechnen ein Aufstellen und Optimieren einer Energiefunktion umfasst, die auf Warpingwerten basiert, die von den Warpingdaten $(\tilde{\Omega}^L ; \tilde{\Omega}^R)$ umfasst sind,
**dadurch gekennzeichnet, dass** die Energiefunktion zumindest einen der folgenden Energieterme umfasst:

- einen Ähnlichkeitserhaltungsenergieterm, der für einen Pixel des monoskopischen Bildes ($I_{in}$) eine Differenz zwischen dem modifizierten Warpingwert, der mit dem Pixel assoziiert ist, und dem Warpingwert, der mit dem Pixel assoziiert ist, bestraft, und

- einen Glattheitserhaltungsenergieterm, der für benachbarte Pixel des monoskopischen Bildes ($I_{in}$), die, falls sie gemäß den Warpingdaten $(\tilde{\Omega}^L ; \tilde{\Omega}^R)$ gewarpt werden, nicht einer Überlappung in der zumindest einen der linken Ansicht $\left(I^L_{out}\right)$ und der rechten Ansicht $\left(I^R_{out}\right)$ resultieren, eine Differenz zwischen (i) einer ersten Differenz zwischen den modifizierten Warpingwerten, die mit den benachbarten Pixeln assoziiert sind, und (ii) einer zweiten Differenz zwischen den Warpingwerten, die mit dem benachbarten Pixeln assoziiert sind, bestraft.

14. Programm, umfassend Programmcode zum Ausführen der Schritte gemäß dem in einem der Ansprüche 1 bis 12 definierten Verfahren, wenn das Computerprogramm von einem Computer ausgeführt wird.


## Revendications

1. Procédé utilisable dans la synthèse d'une image stéréoscopique comprenant une vue $(I^L_{out})$ de gauche et une vue $(I^R_{out})$ de droite d'une image ($I_{in}$) monoscopique décrivant une scène et une topographie (E) de profondeur, comprenant des valeurs de profondeur associées à des pixels de l'image ($I_{in}$) monoscopique, procédé dans lequel :

- on se procure des données $(\tilde{\Omega}^L ; \tilde{\Omega}^R)$ de distorsion correspondant à la topographie (E) de profondeur et comprenant des valeurs de distorsion associées à des pixels de l'image ($I_{in}$) monoscopique, les données $(\tilde{\Omega}^L ; \tilde{\Omega}^R)$ de distorsion indiquant comment l'image ($I_{in}$) monoscopique doit être distordue pour synthétiser au moins l'une de la vue $(I^L_{out})$ de gauche et de la vue $(I^R_{out})$ de droite,
- on détecte des pixels de trou comprenant des pixels voisins de l'image ($I_{in}$) monoscopique, qui, si distordus suivant les données $(\tilde{\Omega}^L ; \tilde{\Omega}^R)$ de distorsion, donneront un trou dans la au moins une de la vue $(I^L_{out})$ de gauche et de la vue $\mathfrak{R}^2$ de droite,
- on calcule, à partir des données $(\tilde{\Omega}^L ; \tilde{\Omega}^R)$ de distorsion, des données $(\Omega^{\wedge L} ; \Omega^{\wedge R})$ modifiées de distorsion comprenant des valeurs modifiées de distorsion, de manière à ce que, si l'image ($I_{in}$) monoscopique est distordue suivant les données $(\Omega^{\wedge L} ; \Omega^{\wedge R})$ modifiées de distorsion pour synthétiser au moins l'une de la vue ($I^L_{out}$) de gauche et de la vue ($I^R_{out}$) de droite, il n'apparaîtra pas de trou dans la au moins une de la au moins une de la vue ($I^L_{out}$) de gauche et de la vue ($I^R_{out}$) de droite,

dans lequel le calcul comprend établir et optimiser une fonction d'énergie qui repose sur des valeurs de distorsion comprises par les données $(\tilde{\Omega}^L ; \tilde{\Omega}^R)$ de distorsion,
**caractérisé en ce que** la fonction d'énergie comprend au moins l'un des termes d'énergie suivants :

- un terme d'énergie préservant la similarité, qui pénalise pour un pixel de l'image ($I_{in}$) monoscopique une différence entre la valeur modifiée de distorsion associée au pixel et la valeur de distorsion associée au pixel et
- un terme d'énergie préservant le lissé, qui pénalise pour des pixels voisins de l'image ($I_{in}$) monoscopique, qui, si distordus suivant les données $(\tilde{\Omega}^L ; \tilde{\Omega}^R)$ de distorsion, ne donneront pas un chevauchement dans la au moins une de la vue ($I^L_{out}$) de gauche et de la vue ($I^R_{out}$) de droite, une différence entre (i) une première différence entre les valeurs modifiées de distorsion associées aux pixels voisins et (ii) une deuxième différence entre les valeurs de distorsion associées aux pixels voisins.

2. Procédé suivant la revendication 1, dans lequel détecter les pixels de trou comprend comparer une différence entre les valeurs de distorsion associées aux pixels voisins à un seuil déterminé à l'avance.

3. Procédé suivant la revendication 1 ou 2, dans lequel l'optimisation de la fonction d'énergie est soumise à une contrainte de remplissage de trou, qui fixe des valeurs modifiées de distorsion associées aux pixels de trou, la fixation comprenant :

- sélectionner, parmi les pixels de trou détectés, un jeu de pixels de trou contigus,
- déterminer, à partir du jeu de pixels de trou contigus, un premier pixel de bordure bordant le jeu de pixels de trou d'un premier côté et un deuxième pixel de bordure bordant le jeu de pixels de trou d'un deuxième côté et
- fixer les valeurs modifiées de distorsion associées au jeu de pixels de trou contigus pour qu'elles soient (i) égales à la valeur de distorsion associée au premier pixel de bordure, si la valeur de profondeur associée au premier pixel de bordure indique une profondeur de scène plus petite que la valeur de profondeur associée au deuxième pixel de bordure, et (ii) égales à la valeur de distorsion associée au deuxième pixel de bordure, si la valeur de profondeur associée au deuxième pixel de bordure indique une profondeur de scène plus petite que la valeur de profondeur associée au premier pixel de bordure.

4. Procédé suivant la revendication 1, dans lequel le terme d'énergie préservant la similarité et/ou le terme d'énergie préservant le lissage comprend une pondération saliency, qui pénalise pour des pixels de l'image ($I_{in}$) monoscopique une modification des valeurs de distorsion associées à certains pixels plus qu'une modification des valeurs de distorsion associées à d'autres pixels de l'image ($I_{in}$) monoscopique.

5. Procédé suivant l'une quelconque des revendications 1 à 4, dans lequel les données ($\tilde{\Omega}^L$ ; $\tilde{\Omega}^R$) de distorsion comprennent des données ($\tilde{\Omega}^L$ ; $\tilde{\Omega}^R$) de distorsion de vue de gauche comprenant des valeurs de distorsion de vue de gauche pour synthétiser la vue ($I^L_{out}$) de gauche et des données ($\tilde{\Omega}^L$ ; $\tilde{\Omega}^R$) de distorsion de vue de droite comprenant des valeurs de distorsion de vue de droite pour synthétiser la vue ($I^R_{out}$) de droite, le procédé comprenant se procurer des données (D) de disparité correspondant à la topographie (E) de profondeur et comprenant des valeurs de disparité associées à des pixels de l'image ($I_{in}$) monoscopique, le calcul comprenant calculer, à partir de données ($\tilde{\Omega}^L$ ; $\tilde{\Omega}^R$) de distorsion de vue de gauche, des données ($\Omega^{\wedge L}$ ; $\Omega^{\wedge R}$) modifiées de distorsion de vue de gauche comprenant des valeurs modifiées de distorsion de vue de gauche, et, à partir de données ($\tilde{\Omega}^L$ ; $\tilde{\Omega}^R$) de distorsion de vue de droite, des données ($\Omega^{\wedge L}$ ; $\Omega^{\wedge R}$) modifiées de distorsion de vue de droite comprenant des valeurs modifiées de distorsion de vue de droite, et dans lequel la fonction d'énergie comprend un terme d'énergie préservant la disparité qui pénalise pour un pixel de l'image ($I_{in}$) monoscopique une différence entre (i) une différence entre la valeur modifiée de distorsion de vue de droite associée au pixel et la valeur modifiée de distorsion de vue de gauche associé au pixel et (ii) la valeur de disparité associée au pixel.

6. Procédé suivant l'une des revendications 1 à 5, dans lequel la fonction d'énergie est optimisée en résolvant un système d'équations linéaires.

7. Procédé suivant l'une des revendications 1 à 6, dans lequel la fonction d'énergie dépend de seulement un sous-jeu des valeurs de distorsion comprises par les données ($\tilde{\Omega}^L$ ; $\tilde{\Omega}^R$) de distorsion.

8. Procédé suivant la revendication 7, dans lequel le sous-jeu des valeurs de distorsion est déterminé en construisant une structure arborescente pour l'image ($I_{in}$) monoscopique, la structure arborescente comprenant des noeuds de feuille à des niveaux différents de la profondeur de l'arbre, chaque noeud de feuille comprenant des coins aux pixels de l'image ($I_{in}$) monoscopique et contenant des pixels de l'image ($I_{in}$) monoscopique, et le sous-jeu des valeurs de distorsion correspondant aux valeurs de distorsion associées aux pixels de coin, qui sont les pixels qui correspondent aux coins des noeuds de feuille.

9. Procédé suivant la revendication 8, dans lequel le procédé comprend se procurer des données (D) de disparité correspondant à la topographie (E) de profondeur et comprenant des valeurs de disparité associées à des pixels de l'image ($I_{in}$) monoscopique et dans lequel construire la structure arborescente comprend couper un noeud de feuille si au moins l'un des critères suivants est satisfait :

- la différence entre une valeur minimum des valeurs de profondeur associées à des pixels voisins d'un pixel ou de plusieurs pixels contenus par le noeud de feuille et une valeur maximum des valeurs de profondeur associées à des pixels voisins d'un pixel ou de plusieurs pixels contenus par le noeud de feuille est supérieure à un seuil déterminé à l'avance,
- le pixel ou les plusieurs pixels contenus par le noeud de feuille comprennent un pixel de trou ou plusieurs pixels de trous,

- une différence entre une valeur minimum des valeurs de disparité associées au un pixel ou aux plusieurs pixels contenus par le noeud de feuille et une valeur maximum des valeurs de disparité associées au un pixel ou aux plusieurs pixels contenus par le noeud de feuille est supérieure à un seuil déterminé à l'avance ou

- une longueur de bord du noeud de feuille est supérieure à une longueur de bord maximum déterminée à l'avance.

10. Procédé suivant la revendication 8 ou 9, dans lequel construire la structure arborescente comprend équilibrer la structure arborescente, de manière à ce que des noeuds de feuille ne partagent pas un bord commun, qui diffère en profondeur arborescente de plus d'un niveau.

11. Procédé suivant l'une des revendications 8 à 10, dans lequel, si la structure arborescente comprend une jonction en T provenant de noeuds de feuille voisins à des niveaux différents de profondeur de l'arbre, l'optimisation de la fonction d'énergie est soumise à une contrainte de jonction en T, qui assure que la valeur modifiée de distorsion associée à un pixel de coin à la jonction en T correspond à une interpolation linéaire des valeurs modifiées de distorsion associées aux deux pixels de coin voisins du pixel de coin à la jonction en T à des côtés opposés de la jonction en T.

12. Procédé suivant l'une des revendications 8 à 11, dans lequel les valeurs modifiées de distorsion associées au un pixel ou aux plusieurs pixels contenus par un noeud de feuille sont interpolées linéairement (ou de manière cubique) à partir des valeurs modifiées de distorsion associées aux pixels de coin du noeud de feuille.

13. Dispositif utilisable pour synthétiser une image stéréoscopique, comprenant une vue ($I^L_{out}$) de gauche et une vue ($I^R_{out}$) de droite d'une image ($I_{in}$) monoscopique décrivant une scène, et une topographie (E) de profondeur, comprenant des valeurs de profondeur associées à des pixels de l'image ($I_{in}$) monoscopique, le dispositif comprenant :

- une unité procurant des données ($\tilde{\Omega}^L;\tilde{\Omega}^R$) de distorsion correspondant à la topographie (E) de profondeur et comprenant des valeurs de distorsion associées à des pixels de l'image ($I_{in}$) monoscopique, les données ($\tilde{\Omega}^L;\tilde{Q}^R$) de distorsion indiquant comment l'image ($I_{in}$) monoscopique peut être distordue pour synthétiser au moins l'une de la vue ($I^L_{out}$) de gauche et de la vue ($I^R_{out}$) de droite,

- une unité de détection pour détecter des pixels de trou comprenant des pixels voisins de l'image ($I_{in}$) monoscopique, qui, si distordus suivant les données ($\tilde{\Omega}^L;\tilde{\Omega}^R$) de distorsion, donneront un trou dans la au moins une de la vue ($I^L_{out}$) de gauche et de la vue ($I^R_{out}$) de droite,

- une unité de calcul pour calculer, à partir des données ($\tilde{\Omega}^L;\tilde{\Omega}^R$) de distorsion, des données ($\Omega^{\wedge L}; \Omega^{\wedge R}$) modifiées de distorsion comprenant des valeurs modifiées de distorsion, de manière à ce que, si l'image ($I_{in}$) monoscopique est distordue suivant les données ($\Omega^{\wedge L}; \Omega^{\wedge R}$) modifiées de distorsion pour synthétiser au moins l'une de la vue ($I^L_{out}$) de gauche et de la vue ($I^R_{out}$) de droite, il n'apparaîtra pas de trou dans la au moins une de la vue ($I^L_{out}$) de gauche et de la vue ($I^R_{out}$) de droite,

dans lequel le calcul comprend établir et optimiser une fonction d'énergie qui repose sur des valeurs de distorsion comprises par les données ($\tilde{\Omega}^L;\tilde{Q}^R$) de distorsion,

**caractérisé en ce que** la fonction d'énergie comprend au moins l'un des termes d'énergie suivants :

- un terme d'énergie préservant la similarité, qui pénalise pour un pixel de l'image ($I_{in}$) monoscopique une différence entre la valeur modifiée de distorsion associée au pixel et la valeur de distorsion associée au pixel et

- un terme d'énergie préservant le lissé, qui pénalise pour des pixels voisins de l'image ($I_{in}$) monoscopique, qui, si distordus suivant les données ($\tilde{\Omega}^L;\Omega^R$) de distorsion, ne donneront pas un chevauchement dans la au moins une de la vue ($I^L_{out}$) de gauche et de la vue ($I^R_{out}$) de droite, une différence entre (i) une première différence entre les valeurs modifiées de distorsion associées aux pixels voisins et (ii) une deuxième différence entre les valeurs de distorsion associées aux pixels voisins.

14. Programme d'ordinateur comprenant un code de programme pour effectuer les stades du procédé défini dans l'une quelconque des revendications 1 à 12, lorsque le programme d'ordinateur est exécuté par un ordinateur.

(a)

(b)

# FIG. 1

input image $I_{in}$

output image $I_{out}$

# FIG. 2

(a) input image $I_{in}$

(b) depth map E

(c) output image $I_{out}^L$

(d) output image $I_{out}^R$

# FIG. 3

(a)

(b)

# FIG. 4

(a) depth discontinuities mask G

(b) left holes mask $H^L$

(c) right holes mask $H^R$

# FIG. 5

(a) disparity map D

(b) quadgraph (leafs of quadtree)

# FIG. 6

FIG. 7

(a) warping map $\tilde{\Omega}^L$

(b) warping map $\tilde{\Omega}^R$

(c) warping map $\hat{\Omega}^L$

(d) warping map $\hat{\Omega}^R$

FIG. 8

(a) soccer  (b) breakdancer  (c) seal  (d) mountains

# FIG. 9

FIG. 10

(a)

(b)

FIG. 11

# FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Declipse 2: Multi-layer image-and-depth with transparency made practical. **B. BARENBRUG.** Proceedings of SPIE Stereoscopic Displays and Applications XX. 2009, vol. 7237
- **M. BERTALMÍO et al.** Image inpainting. *Proceedings of ACM SIGGRAPH, New Orleans, USA,* 2000
- **C. CHENG et al.** Spatio-temporally consistent novel view synthesis algorithm from video-plus-depth sequences for autostereoscopic displays. *IEEE Transactions on Broadcasting,* 2011, vol. 57 (2
- **A. CRIMINISI et al.** Region filling and object removal by exemplar-based image inpainting. *IEEE Transactions on Image Processing,* 2004, vol. 13 (9
- **C. FEHN.** Depth-image-based rendering, compression and transmission for a new approach on 3d-tv. *Proceedings of SPIE Stereoscopic Displays and Virtual Reality Systems XI, San Jose, USA,* 2004
- **O. WANG et al.** Stereobrush: Interactive 2d to 3d conversion using discontinuous warps. *Proceedings of EUROGRAPHICS Symposium on Sketch-Based Interfaces and Modeling, New York, USA,* 2011
- **A. SMOLIC et al.** Three-dimensional video postproduction and processing. *Proceedings of the IEEE,* 2011, vol. 99 (4
- **C. ROTHER et al.** GrabCut: Interactive foreground extraction using iterated graph cuts. *ACM Transactions on Graphics,* 2004, vol. 23 (3
- **J. WANG et al.** Interactive video cutout. *ACM Transactions on Graphics,* 2005, vol. 24 (3
- **A. MYRONENKO ; X. SONG.** Global active contour-based image segmentation via probability alignment. *Proceedings of IEEE Conference on Computer Vision and Pattern Recognition, Miami, USA,* 2009
- **X. BAI et al.** Video snapcut: Robust video object cutout using localized classifiers. *Proceedings of ACM SIGGRAPH, New York, USA,* 2009
- **M. GUTTMANN et al.** Semi-automatic stereo extraction from video footage. *Proceedings of IEEE International Conference on Computer Vision, Kyoto, Japan,* 2009
- **X. YAN et al.** Depth map generation for 2d-to-3d conversion by limited user inputs and depth propagation. *Proceedings of 3DTV Conference: The True Vision - Capture, Transmission and Display of 3D Video, Antalya, Turkey,* 2011

- **M. POLLEFEYS et al.** Visual modeling with a hand-held camera. *International Journal of Computer Vision,* 2004, vol. 59 (3
- **P. FAVARO.** Shape from focus and defocus: Convexity, quasiconvexity and defocus-invariant textures. *Proceedings of IEEE International Conference on Computer Vision, Rio de Janeiro, Brasil,* 2007
- **R. ZHANG et al.** Shape from shading: A survey. *IEEE Transactions on Pattern Analysis and Machine Intelligence,* 1999, vol. 21 (8
- **J.-D. DUROU et al.** Numerical methods for shape-from-shading: A new survey with benchmarks. *Computer Vision and Image Understanding,* 2008, vol. 109 (1
- **D. HOIEM et al.** Automatic photo pop-up. *Proceedings of ACM SIGGRAPH, Los Angeles, USA,* 2005
- **D. FENG et al.** Perception-based construction of 3d models from line drawings. *Proceedings of ACM SIGGRAPH, Boston, USA,* 2006
- **L. ZHANG et al.** 3d-tv content creation: Automatic 2d-to-3d video conversion. *IEEE Transactions of Broadcasting,* 2011, vol. 57 (2
- **J. SHADE et al.** Layered depth images. *Proceedings of ACM SIGGRAPH, Orlando, USA,* 1998
- **Z. TAUBER et al.** Review and preview: Disocclusion by inpainting for image-based rendering. *IEEE Transactions on Systems, Man, and Cybernetics, Part C: Applications and Reviews,* 2007, vol. 37 (4
- **V. CASELLES.** Exemplar-based image inpainting and applications. *Proceedings of International Congress on Industrial and Applied Mathematics, Vancouver, Canada,* 2011
- **M. BERTALMÍO et al.** Navier-stokes, fluid dynamics, and image and video inpainting. *Proceedings of IEEE Computer Society Conference on Computer Vision and Pattern Recognition,* 2001, vol. 1
- **T. CHAN ; J. SHEN.** Variational image inpainting. *Communications on Pure and Applied Mathematics,* 2005, vol. 58 (5
- **T. SHIH ; R. CHANG.** Digital inpainting-survey and multilayer image inpainting algorithms. *Proceedings of International Conference on Information Technology and Applications,* 2005, vol. 1
- **I. FIDANER.** *A survey on variational image inpainting, texture synthesis and image completion,* 2008, http://www.scribd.com/doc/3012627

- **Y. WANG et al.** Optimized scale-and-stretch for image resizing. *ACM Transactions on Graphics,* 2008, vol. 27 (5
- **P. KRÄHENBÜHL et al.** A system for retargeting of streaming video. *ACM Transactions on Graphics,* 2009, vol. 28 (5
- **Y. GUO et al.** Image retargeting using mesh parametrization. *IEEE Transactions on Multimedia,* 2009, vol. 11 (5
- **A. SHAMIR ; O. SORKINE.** Visual media retargeting. *Proceedings of ACM SIGGRAPH ASIA, Yokohama, Japan,* 2009
- **M. LANG et al.** Nonlinear disparity mapping for stereoscopic 3d. *ACM Transactions on Graphics,* 2010, vol. 29 (4
- **D. TIAN et al.** View synthesis techniques for 3d video. *Proceedings of SPIE Applications of Digital Image Processing XXXII,* 2009, vol. 7443
- **J. CHOI et al.** Visual fatigue modeling and analysis for stereoscopic video. *Optical Engineering,* 2012, vol. 51 (1

- **S. GOFERMAN et al.** Context-aware saliency detection. *Proceedings of IEEE Conference on Computer Vision and Pattern Recognition, San Francisco, USA,* 2010
- **M. CHENG et al.** Global contrast based salient region detection. *Proceedings of IEEE Conference on Computer Vision and Pattern Recognition, Colorado Springs, USA,* 2011
- **Q. HUYNH-THU et al.** Video quality assessment: From 2d to 3d-challenges and future trends. *Proceedings of IEEE International Conference on Image Processing, Hong Kong,* 2010
- **Z. WANG et al.** Image quality assessment: From error visibility to structural similarity. *IEEE Transactions on Image Processing,* 2004, vol. 13 (4
- **P. HANHART ; T. EBRAHIMI.** Quality assessment of a stereo pair formed from decoded and synthesized views using objective metrics. *Proceedings of 3DTV Conference: The True Vision - Capture, Transmission and Display of 3D Video, Zurich, Switzerland,* 2012